(19) Europäisches Patentamt / European Patent Office / Office européen des brevets

(11) **EP 2 189 979 A1**

(12) **EUROPEAN PATENT APPLICATION**
published in accordance with Art. 153(4) EPC

(43) Date of publication:
**26.05.2010 Bulletin 2010/21**

(51) Int Cl.:
**G11B 7/0045** (2006.01)     **G11B 7/007** (2006.01)
**G11B 7/09** (2006.01)       **G11B 7/135** (2006.01)
**G11B 7/24** (2006.01)

(21) Application number: **09735642.2**

(22) Date of filing: **22.04.2009**

(86) International application number:
**PCT/JP2009/058430**

(87) International publication number:
**WO 2009/131241 (29.10.2009 Gazette 2009/44)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **23.04.2008 JP 2008113064**

(71) Applicant: **Sony Corporation**
**Tokyo 108-0075 (JP)**

(72) Inventor: **UEDA, Daisuke**
**Tokyo 108-0075 (JP)**

(74) Representative: **Ealey, Douglas Ralph**
**D Young & Co LLP**
**120 Holborn**
**London EC1N 2DY (GB)**

(54) **OPTICAL INFORMATION RECORDING DEVICE, OPTICAL INFORMATION RECORDING METHOD, OPTICAL INFORMATION REPRODUCTION DEVICE, OPTICAL INFORMATION REPRODUCTION METHOD, AND OPTICAL INFORMATION RECORDING MEDIUM**

(57)     The present invention can record sub-data. An optical disk drive (20) controls a laser diode (51), which serves as a light source, according to recording main-data information (Da) based on main data, and thus forms a record mark (RM) along a virtual irradiation line (TL) in an optical disk (100). The optical disk drive (20) shifts a target depth in a focusing direction according to recording sub-data information (Db) based on sub-data, and thus forms the record mark (RM) with the center of the record mark deviated in the focusing direction from the irradiation line (TL).

[FIG. 1]

100H BORE

100 OPTICAL DISK

100 OPTICAL DISK

**Description**

Technical Field

The present invention relates to an optical information recording apparatus, an optical information recording method, an optical information reproducing apparatus, an optical information reproducing method, and an optical information recording medium. The present invention is preferably applied to an optical information recording/reproducing apparatus that records information in an optical recording medium using, for example, a light beam, and reproduces the information from the optical information recording medium using the light beam.

Background Art

In the past, optical disk drives that employ a disk-like optical disk as an optical information recording medium have widely prevailed as optical information recording/reproducing apparatuses. As the optical disk, a compact disc (CD), a digital versatile disc (DVD), a Blu-ray disk (registered trademark, BD), or the like is generally adopted.

In general, in the conventional optical disks, main data is recorded as information in the form of a record mark in a signal recording surface, which reflects a light beam, by forming irregularities or varying a reflectance. Among the optical disk drives, an optical disk drive that records sub-data by forming a code mark, which has a different reflectance, on a recording track on which a record mark is formed, so that the code mark will be superposed on the record mark has been proposed (refer to, for example, patent document 1).

In the optical disk drive, various contents including a musical content and a video content or various pieces of information including various kinds of data items for computers are recorded in an optical disk. In recent years, an amount of information has increased along with a trend toward high-definition video or high-quality music. In addition, the number of contents to be recorded in one optical disk is requested to be increased. Accordingly, the optical disk is requested to have a larger capacity.

As one of techniques for increasing the capacity of an optical disk, an optical disk drive that forms multiple record marks in the thickness direction of a homogeneous recording layer, and thus records information in multiple mark layers has been proposed (refer to, for example, patent document 2).

Patent document 1 refers to Patent No. 354410, and patent document 2 refers to JP-A-2008-71433.

As for the optical disk drive described in the patent document 2, the method of recording or reproducing main data is proposed. However, a method of recording or reproducing sub-data in the same manner as the conventional optical disk drive does has not been proposed.

Disclosure of the Invention

The present invention is made in consideration of the foregoing point, and intended to propose an optical information recording apparatus and an optical information recording method capable of recording sub-data, an optical information reproducing apparatus and an optical information reproducing method capable of reproducing the sub-data, and an optical information recording medium from which the sub-data can be reproduced.

In order to accomplish the above object, an optical information recording apparatus in accordance with the present invention includes: an objective lens that concentrates information light and irradiates it to an optical information recording medium in which information is recorded in the form of a record mark by irradiating the information light, which is emitted from a light source and has an intensity equal to or larger than a predetermined intensity, to the optical information recording medium; a focus shift unit that shifts the focus of the information light to a target depth, to which the information light should be irradiated, by shifting the focus of the information light in a focusing direction in which the objective lens recedes from or approaches to the optical information recording medium; a main data recording unit that forms the record marks along a virtual irradiation line in the optical information recording medium by controlling the light source according to information based on the main data; and a sub-data recording unit that shifts the target depth in the focusing direction according to information based on the sub-data, and thus forms the record mark with the center of the record mark deviated from the irradiation line in the focusing direction.

Accordingly, in the optical information recording apparatus, the sub-data can be embedded in the record mark in the form of which the main data is recorded.

An optical information recording method in accordance with the present invention includes a record mark forming step of, when a record mark is formed along a virtual irradiation line in an optical information recording medium by irradiating information light, which is emitted from a light source, to the optical information recording medium in which information is recorded in the form of a record mark by irradiating information light, which is emitted from the light source and has an intensity equal to or larger than a predetermined intensity, to the optical information recording medium, shifting the focus of the information light in a focusing direction according to information based on sub-data, and thus forming the record mark by deviating the record mark from the irradiation line in the focusing direction.

Accordingly, the optical information recording method can embed sub-data in a record mark in the form of which main data is recorded.

Further, an optical information reproducing apparatus in accordance with the present invention includes: a light source that emits information light; an object lens that concentrates the information light and irradiates it to an optical information recording medium; a record mark detection unit that detects the presence or absence of a record mark, which is formed along a virtual irradiation line in the optical information recording medium, on the basis of a reflected light beam which is the information light reflected from the optical information recording medium: and a deviation detection unit that detects the presence or absence of a deviation of the center of the record mark from the irradiation line in a focusing direction, in which the objective lens recedes from or approaches to the optical information recording medium, on the basis of the reflected light beam.

Accordingly, the optical information reproducing apparatus can reproduce main data according to the presence or absence of a record mark, and reproduce sub-data according to the presence or absence of a deviation of the center of the record mark from the irradiation line.

An optical information reproducing method in accordance with the present invention includes: a light receiving step of receiving a reflected light beam that is light emitted from a light source and reflected from an optical information recording medium; and a detection step of detecting the presence or absence of a record mark on the basis of the reflected light beam, and detecting the presence or absence of a deviation of the center of the record mark from an irradiation line in a focusing direction, in which an objective lens recedes from or approaches to the optical information recording medium, on the basis of the reflected light beam.

Accordingly, the optical information reproducing method can reproduce main data according to the presence or absence of a record mark to be detected with modulated information light, and reproduce sub-data according to the presence or absence of a deviation of the center of the record mark from the irradiation line.

Further, an optical information recording medium in accordance with the present invention includes a recording layer in which: main data is recorded according to the presence or absence of a record mark to be formed with irradiation of information light; sub-data is recorded by forming the record mark with the center of the record mark deviated in a focusing direction parallel to the light axis of the information light; and the irradiated information light is modulated by the record mark.

Accordingly, the optical information recording medium makes it possible to reproduce main data according to the presence or absence of a record mark, and to reproduce sub-data according to the presence or absence of a deviation of the center of the record mark from an irradiation line.

An optical information recording apparatus in accordance with the present invention includes: an objective lens that concentrates information light and servo light for servo control and irradiates them to an optical information recording medium in which information is recorded in the form of a record mark by irradiating the information light, which is emitted from a light source and has an intensity equal to or larger than a predetermined intensity, to the optical information recording medium; an objective lens drive unit that drives the objective lens so that the servo light will be focused on a reflecting layer which is formed in the optical information recording medium and reflects at least part of the servo light; a focus shift unit that separates the focus of the information light from the focus of the servo light by an arbitrary distance in a focusing direction in which the object lens recedes from or approaches to the optical information recording medium, and squares the focus of the information light with a target depth to which the information light should be irradiated; a main data recording unit that forms a record mark along a virtual irradiation line in the optical information recording medium by controlling the light source according to information based on main data; and a sub-data recording unit that deviates the center of the record mark from the irradiation line by shifting the target depth in the focusing direction according to information based on sub-data.

Accordingly, the optical information recording apparatus can form a record mark along an appropriate irradiation line while implementing high-definition focusing control with a reflecting layer as a reference, and can appropriately deviate the record mark from the irradiation line.

Further, an optical information reproducing apparatus in accordance with the present invention includes: an objective lens that concentrates and irradiates information light for information reproduction and servo light for servo control; an objective lens drive unit that drives the objective lens so that the servo light will be focused on a reflecting layer which is formed in an optical information recording medium and reflects at least part of the servo light; a focus shift unit that separates the focus of the information light from the focus of the servo light by an arbitrary distance in a focusing direction in which the objective lens approaches to or recedes from the optical information recording medium, and squares the focus of the information light with a target depth to which the information light should be irradiated; a record mark detection unit that detects the presence or absence of a record mark, which is formed along a virtual irradiation line in the optical information recording medium, on the basis of a reflected light beam that is the information light reflected from the optical information recording medium; and a deviation detection unit that detects the presence or absence of a deviation of the center of the record mark from the irradiation line in the focusing direction, in which the objective lens recedes from or approaches to the optical information recording medium, on the basis of the reflected light beam.

Accordingly, the optical information reproducing apparatus can implement focusing control using servo light that is unsusceptible to a deviation of the center of a record mark from an irradiation line, and can therefore reliably detect the presence or absence of the deviation representing sub-data by reliably irradiating information light to the irradiation line.

An optical information recording medium in accordance with the present invention includes: a recording layer in which main data is recorded according to the presence or absence of a record mark formed along a virtual irradiation line, sub-data is recorded by forming the record mark with the center of the record mark deviated from the irradiation line, and irradiated information light is modulated by the record mark; and a reflecting layer that reflects at least part of servo light irradiated in order to square the position of the information light in the recording layer with an arbitrary position.

Accordingly, in the optical information recording medium, focusing control that employs servo light unsusceptible to a deviation of the center of a record mark from an irradiation line can be implemented. Therefore, the information light can be reliably irradiated to the irradiation line, and the presence or absence of the deviation representing sub-data can be reliably detected from the modulated information light.

According to the present invention, there are provided an optical information recording apparatus and an optical information recording method capable of embedding sub-data in a record mark in the form of which main data is recorded, and thus recording the sub-data.

According to the present invention, there are provided an optical information reproducing apparatus and an optical information reproducing method capable of reproducing main data according to the presence or absence of a record mark, reproducing sub-data according to the presence or absence of a deviation of the center of the record mark from an irradiation line, and thus reproducing the sub-data.

According to the present invention, there is provided an optical information recording medium from which main data can be reproduced according to the presence or absence of a record mark detected with demodulated information light, sub-data can be reproduced according to the presence or absence of a deviation of the center of the record mark from an irradiation line, and the sub-data can be reproduced.

Further, according to the present invention, there is provided an optical information recording apparatus capable of forming a record mark along an appropriate irradiation line while implementing high-definition focusing control with a reflecting layer as a reference, appropriately deviating a record mark from the irradiation line, and thus recording sub-data.

Further, according to the present invention, there is provided an optical information reproducing apparatus capable of implementing focusing control using servo light unsusceptible to a deviation of the center of a record mark from an irradiation line, reliably detecting the presence or absence of the deviation, which represents sub-data, by reliably irradiating information light to an irradiation line, and thus reproducing the sub-data.

Further, according to the present invention, there is provided an optical information recording medium in which since focusing control employing servo light unsusceptible to a deviation of the center of a record mark from an irradiation line can be implemented, information light can be reliably irradiated to an irradiation line, the presence or absence of the deviation which represents sub-data can be reliably detected from the modulated information light, and the sub-data can be reproduced.

Brief Description of the Drawings

Fig. 1 is a schematic diagram showing the appearance of an optical disk;
Fig. 2 is a schematic diagram showing the internal construction of the optical disk;
Fig. 3 includes schematic diagrams for use in explaining the formation (1) of a record mark;
Fig. 4 is a schematic diagram for use in explaining the formation (2) of a record mark;
Fig. 5 includes schematic diagrams for use in explaining embedment of sub-data and various kinds of signals;
Fig. 6 is a schematic diagram showing the configuration of an optical disk drive;
Fig. 7 is a schematic diagram showing the construction of an optical pickup;
Fig. 8 is a schematic diagram for use in explaining the light path of a red light beam;
Fig. 9 is a schematic diagram showing the construction (1) of a detection field in a photodetector;
Fig. 10 is a schematic diagram for use in explaining the light path of a blue light beam;
Fig. 11 is a schematic diagram for use in explaining selection of a light beam by a pinhole plate;
Fig. 12 is a schematic diagram showing the construction (2) of the detection field in the photodetector;
Fig. 13 is a schematic diagram showing the configuration of a recording control unit;
Fig. 14 is a schematic diagram for use in explaining information recording processing performed in a first embodiment;
Fig. 15 is a schematic diagram showing the configuration of a reproduction control unit employed in the first embodiment;

Fig. 16 is a schematic diagram for use in explaining information reproducing processing performed in the first embodiment;

Fig. 17 includes schematic diagrams showing the construction of an optical pickup employed in an optical information recording apparatus;

Fig. 18 is a schematic diagram for use in explaining information recording processing performed in a second embodiment;

Fig. 19 is a schematic diagram showing the construction of an optical pickup included in an optical information reproducing apparatus;

Fig. 20 is a schematic diagram showing the configuration of a reproduction control unit employed in the second embodiment;

Fig. 21 is a schematic diagram for use in explaining information reproducing processing performed in the second embodiment; and

Fig. 22 includes schematic diagrams showing the configuration of a copy prevention system.

Best Mode for Carrying Out the Invention

Referring to the drawings, an embodiment of the present invention will be described below.

(1) First Embodiment

(1-1) Construction of an optical disk

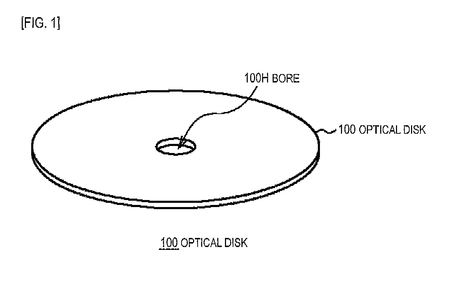

To begin with, an optical disk 100 employed as an optical information recording medium in the present invention will be described below. As seen from the appearance diagram shown in Fig. 1, the optical disk 100 is formed like a disk, which has a diameter of approximately 120 mm, as a whole similarly to the conventional CD, DVD, and BD, and has a bore 100H in the center thereof.

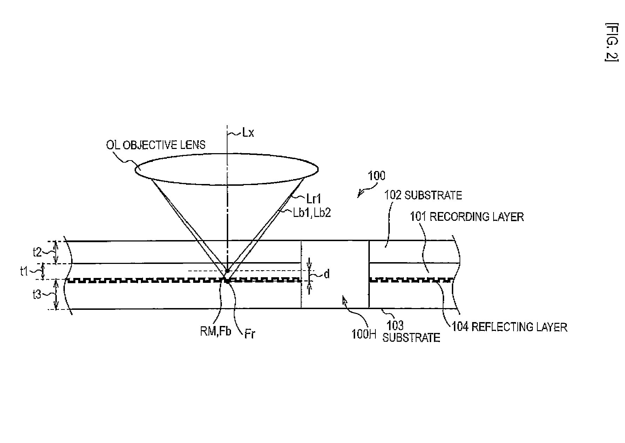

The optical disk 100 includes, as seen from the sectional view shown in Fig. 2, a recording layer 101, in which information is recorded, in the center thereof, and has the surfaces of the recording layer 101 sandwiched between substrates 102 and 103.

Incidentally, the thickness t1 of the recording layer 101 is approximately 0.3 mm, and the thicknesses t2 and t3 of the substrates 102 and 103 are approximately 0.6 mm.

The substrates 102 and 103 are made of a material, for example, polycarbonate or glass, and each transmit light, which is routed through one surface thereof, to the opposite surface at a high transmittance. The substrates 102 and 103 have a certain degree of strength and fill the role of protecting the recording layer 101. The surfaces of the substrates 102 and 103 may be finished by non-reflection coating in order to prevent unnecessary reflection.

The optical disk 100 includes a reflecting surface 104 on the interface between the recording layer 101 and substrate 103. The reflecting layer 104 is made of a dielectric multilayer film or the like, and reflects both a blue light beam Lb1 that is blue laser light having a wavelength of 405 nm, and a red light beam Lr1 that is red laser light having a wavelength of 660 nm.

The reflecting layer 104 has guide grooves for tracking servo formed therein. More particularly, helical tracks are formed with lands and grooves similar to those in typical BD-R (recordable) disks. To the tracks, addresses that are serial numbers are assigned at intervals of a predetermined recording unit. A track in or from which information is recorded or reproduced can be identified with the address.

In the reflecting layer 104 (that is, the interface between the recording layer 101 and substrate 103), pits or the like may be formed in place of the guide grooves. Otherwise, the guide grooves and pits may be combined.

When the red light beam Lr1 is irradiated from the side of the substrate 102, the reflecting layer 104 reflects the red light beam to the side of the substrate 102. Hereinafter, the reflected light beam shall be called a red light beam Lr2.

The red light beam Lr2 is supposed to be employed in, for example, an optical disk drive in positional control for an objective lens OL (that is, focusing control and tracking control), which concentrates the red light beam Lr1, for the purpose of squaring the focus Fr of the red light beam Lr1 with a target track (hereinafter called a desired servo track) in the reflecting layer 104.

In reality, when information is recorded in the optical disk 100, the red light beam Lr1 is, as shown in Fig. 2, concentrated by the objective lens OL having been positionally controlled, and focused on a desired servo track in the reflecting layer 104.

The blue light beam Lb1 that shares a light axis Lx with the red light beam Lr1 and is concentrated by the objective lens OL is transmitted by the substrate 102, and focused on a position in the recording layer 101 equivalent to the desired servo track. At this time, with the objective lens OL as a reference, the focus Fb of the blue light beam Lb1 is located nearer than the focus Fr on the common light axis Lx is, that is, on a closer side.

When information is recorded in the optical disk 100, a record mark RM realized with, for example, a bubble is formed in a portion within the recording layer 101 in which a light intensity is equal to or larger than a predetermined intensity because of the concentration of the blue light beam Lb1 for information recording having a relatively large light intensity (that is, in the vicinity of the focus Fb). For example, assuming that the wavelength $\lambda$ of the blue light beam Lb1 is 405 nm, the numerical aperture NA of the objective lens OL is 0.5, and the refractive index n of the objective lens OL is 1.5, the record mark RM whose diameter RMr and height RMh are on the order of 1 $\mu$m and 10 $\mu$m respectively is formed.

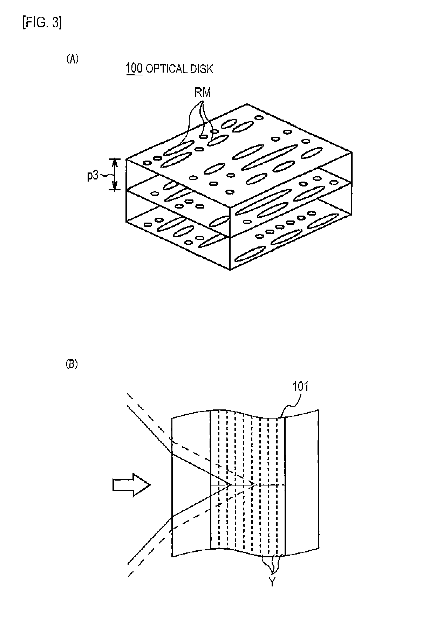

Further, the optical disk 100 is designed so that the thickness t1 of the recording layer 101 (= 0.3 mm) will be much larger than the height RMh of the record mark RM. Therefore, the optical disk 100 undergoes multilayer recording during which the record mark RM is recorded by varying a distance d within the recording layer 101 from the reflecting layer 104 (hereinafter called a depth), and multiple mark recording layers Y are thus, as shown in Figs. 3 (A) and (B), accumulated on one another in the thickness direction of the optical disk 100. The mark recording layers Y refer to virtual layers, and the border between adjoining mark recording layers Y does not exist in reality.

In this case, when the depth d of the focus Fb of the blue light beam Lb within the recording layer 101 of the optical disk 100 is adjusted, the depth of the record mark RM is varied. For example, if the distance p3 between mark recording layers Y (that is, the height of the mark recording layer Y) is set to approximately 15 $\mu$m in consideration of the mutual interference between record marks RM, approximately twenty mark recording layers Y can be formed within the recording layer 101. As for the distance p3, aside from approximately 15 $\mu$m, any of other various values may be adopted in consideration of the mutual interference between record marks RM.

In the recording layer 101, as shown in Fig. 3(A), record marks RM whose mark lengths range from 3T to 11T are formed. Main data representing main information is supposed to be recorded according to the length of the record mark RM and the length of a space in a tracking direction in which the record mark RM is not formed.

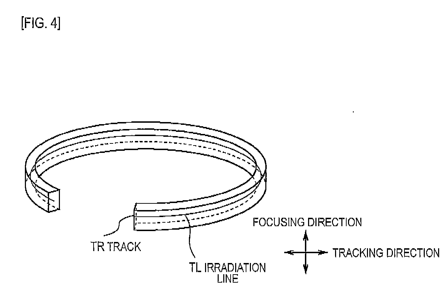

The recording layer 101 is, as shown in Fig. 4, supposed to have the blue light beam Lb1 irradiated to any of helical irradiation lines in each of the mark recording layers Y therein. Therefore, when the record marks RM are formed along the irradiation lines TL in the recording layer 101, helical tracks TR having the irradiation lines TL as centers thereof are formed. The tracks TR refer to virtual tracks, and the border between adjoining tracks TR does not actually exist.

When information is reproduced from the optical disk 100, similarly to when information is recorded therein, the objective lens OL (Fig. 2) is positionally controlled so that the red light beam Lr1 concentrated by the objective lens OL will be focused on a desired servo track in the reflecting layer 104.

Further, the optical disk 100 is designed so that the focus Fb of the blue light beam Lb1 for information reading which is concentrated via the same objective lens OL and has a relatively small light intensity will be focused on a position in the recording layer 101 equivalent to both a position on a closer side of a desired servo track and a target depth (hereinafter called a target mark position).

At this time, the record mark RM recorded at the position of the focus Fb reflects the blue light beam Lb1 due to a difference in a refractive index from the surroundings, and the blue light beam Lb2 is generated from the record mark RM recorded at the target mark position. Specifically, the recording layer 101 modulates the blue light beam Lb1 according to the presence or absence of the record mark RM, and produces the blue light beam Lb2.

As mentioned above, when information is recorded in the optical disk 100, if the red light beam Lr1 for positional control and the blue light beam Lb1 for information recording are employed, the record mark RM is formed as information at a position in the recording layer 101 to which the focus Fb is irradiated, that is, a target mark position equivalent to both a position on the closer side of a desired servo track in the reflecting layer 104 and a position at a target depth.

When recorded information is reproduced from the optical disk 100, if the red light beam Lr1 for positional control and the blue light beam Lb1 for information reading are employed, the blue light beam Lb2 is generated from the record mark RM recorded at the position of the focus Fb, that is, at the target mark position.

In addition to the foregoing constitution, the optical disk 100 is designed so that when the record mark RM is formed while being deviated from the irradiation line TL in a focusing direction, not only main data representing main information is recorded but also sub-data representing subordinate information is embedded or recorded.

Specifically, in the recording layer 101 of the optical disk 100, the record mark RM is formed along the irradiation line TL. However, the center line $C_{FC}$ of the record mark RM in the focusing direction is slightly deviated from the irradiation line TL according to sub-data.

The out-of-focus quantity $\Delta$Mc of the center line $C_{FC}$ from the irradiation line TL is set to, for example, about 1/50 of the thickness p3 of the mark recording layer Y (that is, the height of the track TR) for fear it may adversely affect an amount of light of the blue light beam Lb2.

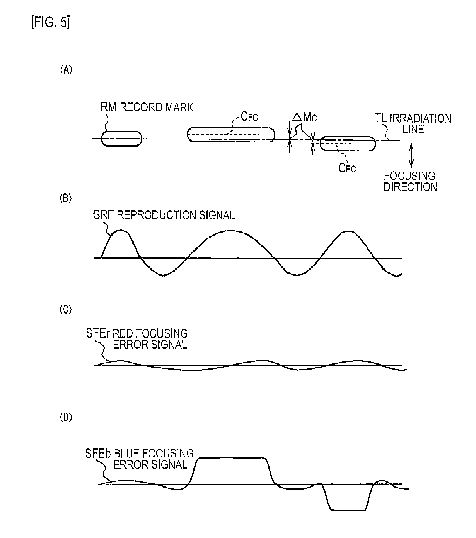

Therefore, as shown in Fig. 5(B), the optical disk 100 hardly affects a reproduction signal SRF to be produced based on the blue light beam Lb2. Therefore, the optical disk 100 permits, similarly to the conventional optical disk drives, reproduction of main data based on the reproduction signal SRF.

As mentioned above, during information reproducing processing, the objective lens OL is displaced so that the red light beam Lr1 will be focused on the reflecting layer 104 of the optical disk 100, and focusing control is implemented. As shown in Fig. 5(C), the optical disk 100 will not affect a red focusing error signal SFEr produced based on the red light beam Lr2.

In contrast, the signal level of a blue focusing error signal SFEb produced based on the blue light beam Lb2 varies depending on the presence or absence of a deviation of the record mark RM. Therefore the optical disk 100 produces, as shown in Fig. 5(D), the blue focusing error signal SFEb, and thus permits detection of the presence or absence of the deviation of the record mark RM in the focusing direction (that is, an out-of-focus quantity $\Delta$Mc) and also permits reproduction of sub-data based on the presence or absence of the deviation.

As mentioned above, the record mark RM is formed while being deviated from the irradiation line TL in the focusing direction according to sub-data. Therefore, main data can be reproduced from the reproduction signal SRF as it conventionally is, but the reproduction signal SRF will not hardly affected. Further, sub-data can be reproduced from the optical disk 100 by detecting the out-of-focus quantity $\Delta$Mc on the basis of the blue focusing error signal SFEb.

(1-2) Configuration of an optical disk drive

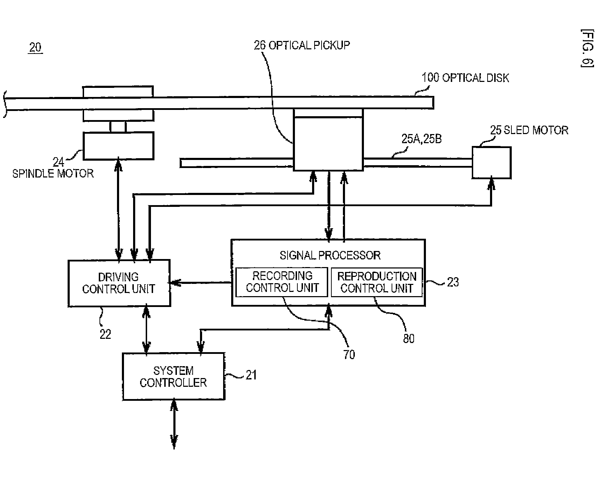

An optical disk drive 20 compatible with the foregoing optical disk 100 will be described below. The optical disk drive 20 has, as shown in Fig. 6, the whole thereof organized and controlled by a system controller 21.

The system controller 21 is formed mainly with a central processing unit (CPU) that is not shown, reads various kinds of programs including a basic program and an information recording program from a read-only memory (ROM) that is not shown, develops the programs in a random access memory (RAM) that is not shown, and thus executes various kinds of pieces of processing including information recording processing and information reproducing processing. signal to the optical pickup 26.

The optical pickup 26 performs focusing control and tracking control under the control of the driving control unit 22 so as to square the irradiated position of the blue light beam Lb1 with a track (hereinafter called a target track) in the recording layer 101 of the optical disk 100 indicated with the recording address information, and thus records the record mark RM consistent with the record signal sent from the signal processor 23 (a full detail will be given later).

On receipt of an information reproduction instruction and reproducing address information indicating an address of recording information from, for example, external equipment (not shown), the system controller 21 feeds a driving instruction to the driving control unit 22, and feeds a reproducing processing instruction to the signal processor 23. Similarly to a case where information is recorded, the driving control unit 22 rotates the optical disk 100 at a predetermined rotating speed by controlling driving of the spindle motor 24, controls driving of the sled motor 25, and thus moves the optical pickup 26 to a position consistent with the reproducing address information.

The optical pickup 26 performs focusing control and tracking control under the control of the driving control unit 22 so as to square the irradiated position of the blue light beam Lb1 with a track in the recording layer 101 of the optical disk 100 indicated with the reproducing address information (that is, a target track), and then irradiates a light beam of a predetermined amount of light. At this time, the optical pickup 26 detects the blue light beam Lb2 generated from the record mark RM in the recording layer 101 of the optical disk 100, and feeds a detection signal consistent with the amount of light to the signal processor 23 (a full detail will be given later).

The signal processor 23 produces reproductive information by performing various kinds of pieces of signal processing including predetermined demodulating processing and decoding processing on the fed detection signal, and feeds the reproductive information to the system controller 21. The system controller 21 in turn sends the reproductive information to the external equipment (not shown).

As mentioned above, the optical disk drive 20 uses the system controller 21 to control the optical pickup 26, and records information at a target mark position in the recording layer 101 of the optical disk 100, or reproduces information from the target mark position.

(1-3) Construction of the optical pickup

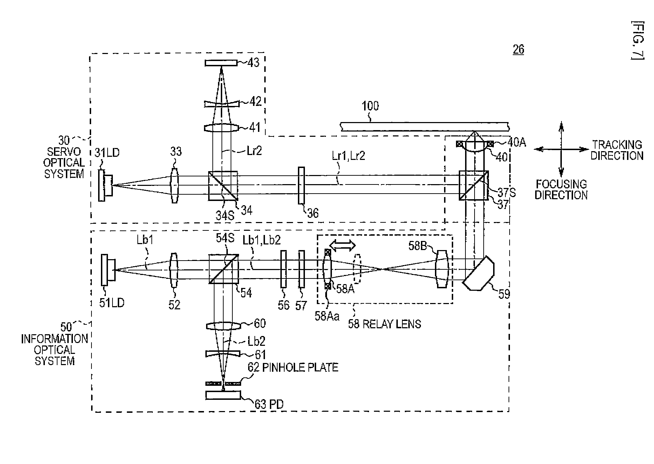

Next, the construction of the optical pickup 26 will be described below. The optical pickup 26 includes, as shown in Fig. 7, a servo optical system 30 for servo control and an information optical system 50 for reproduction or recording of information.

The optical pickup 26 routes the red light beam Lr1, which serves as servo light and is emitted from a laser diode 31, and the blue light beam Lb1, which serves as information light and is emitted from a laser diode 51, to the same objective lens 40 via a servo optical system 30 or an information optical system 50 respectively, and thus irradiates the beams to the optical disk 100.

(1-3-1) Light path of the red light beam

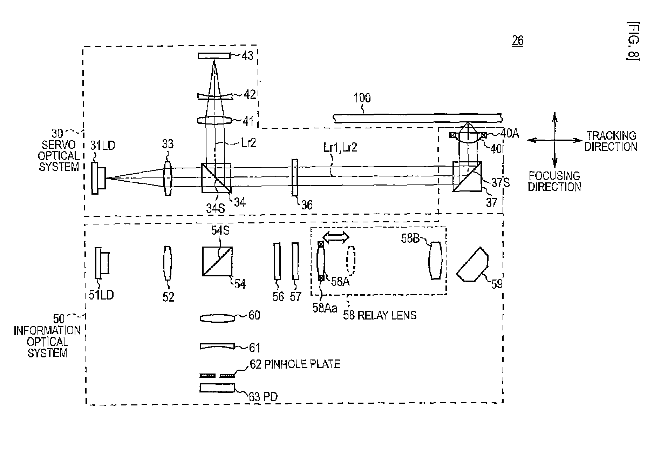

As shown in Fig. 8, in the servo optical system 30, the red light beam Lr1 is irradiated to the optical disk 100 via the objective lens 40, and the red light beam Lr2 reflected from the optical disk 100 is received by a photodetector 43.

Specifically, the laser diode 31 emits rid laser light that is p-polarized light having a wavelength of approximately 660 nm. In reality, the laser diode 31 irradiates the red light beam Lr1 of a predetermined amount of light, which includes diverging rays, under the control of the system controller 21 (Fig. 6), and routes it to a collimator lens 33. The collimator lens 33 converts the red light beam Lr1 from the diverging rays to parallel rays, and routes it to a polarization beam splitter 34.

The polarization beam splitter 34 uses a reflecting/transmitting surface 34S thereof to reflect or transmit a light beam at a ratio that varies depending on the deflecting direction of the light beam. The reflecting/transmitting surface 34S nearly totally transmits a light beam that is p-polarized light, and nearly totally reflects a light beam that is s-polarized light.

The polarization beam splitter 34 nearly totally transmits the red light beam Lr1 that is p-polarized light, and routes it to a quarter-wave plate 36.

The quarter-wave plate 36 converts the red light beam Lr1 that is p-polarized light into, for example, left-handed circularly polarized light, and routes it to a dichroic prism 37. The dichroic prism 37 uses a reflecting/transmitting surface 37S thereof to reflect or transmit a light beam according to the wavelength of the light beam. Accordingly, the dichroic prism 37 reflects the red light beam Lr1 and routes it to the objective lens 40.

The objective lens 40 concentrates the red light beam Lr1, and irradiates it to the reflecting layer 104 of the optical disk 100. At this time, the red light beam Lr1 is, as shown in Fig. 2, transmitted by the substrate 102, reflected by the reflecting layer 104, and then oriented in a direction opposite to the red light beam Lr1. This results in the red light beam Lr2 whose deflecting direction is reverse to that of the red light beam Lr1.

Thereafter, the red light beam Lr2 is converted into parallel rays by the objective lens 40, and routed to the dichroic prism 37. The dichroic prism 37 reflects the red light beam Lr2, and routes it to the quarter-wave plate 36.

The quarter-wave plate 36 converts the red light beam Lr2, which is right-handed circularly polarized light, into s-polarized light, and routes it to the polarization beam splitter 34. The polarization beam splitter 34 reflects the red light beam Lr2, which is s-polarized light, according to the polarizing direction of the red light beam, and routes it to a multi-lens 41.

The multi-lens 41 allows the red light beam Lr2 to converge, and irradiates the red light beam Lr2, to which an astigmatism is applied by a cylindrical lens 42, to the photodetector 43.

In the optical disk drive 20, there is a possibility that a surface shake or the like may occur in the rotating optical disk 100. Therefore, there is a possibility that the position of a desired servo track relative to the objective lens 40 may vary.

Therefore, in order to cause the focus Fr (Fig. 2) of the red light beam Lr1 to follow a target track, the focus Fr has to be shifted in a focusing direction that is an approaching or receding direction with respect to the optical disk 100, and a tracking direction that is an internal-circumference or external-circumference direction of the optical disk 100.

The objective lens 40 can be driven in two axial directions, which are the focusing direction and tracking direction, by a biaxial actuator 40A.

In the servo optical system 30 (Fig. 8), the optical positions of various kinds of optical parts are adjusted so that an in-focus state attained when the red light beam Lr1 is concentrated by the objective lens 40 and irradiated to the reflecting layer 104 of the optical disk 100 will be reflected on an in-focus state attained when the red light beam Lr2 is concentrated by the multi-lens 41 and irradiated to the photodetector 43.

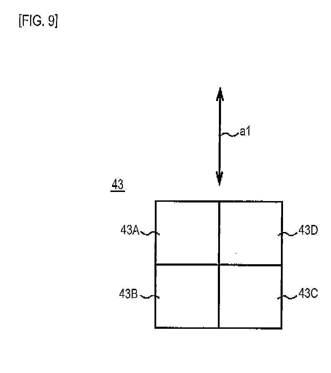

The photodetector 43 has, as shown in Fig. 9, four detection fields 43A, 43B, 43C, and 43D segmented in the form of a lattice on a surface thereof to which the red light beam Lr2 is irradiated. A direction indicated with an arrow a1 (lengthwise direction in the drawing) corresponds to a track traveling direction in which the red light beam Lr1 propagates when irradiated to the reflecting layer 104 (Fig. 2).

The photodetector 43 uses the detection fields 43A, 43B, 43C, and 43D thereof to detect parts of the red light beam Lr2, produces detection signals SDAr, SDBr, SDCr, and SDDr according to detected amounts of light, and sends them to the signal processor 23 (Fig. 6).

The signal processor 23 implements focusing control according to a so-called astigmatism method, calculates a red focusing error signal SFEr according to an equation (1) presented below, and feeds it to the driving control unit 22.

$$SFEr = (SDAr + SDCr) - (SDBr + SDDr) \quad \ldots \quad (1)$$

The red focusing error signal SFEr represents a magnitude of a deviation of the focus Fr of the red light beam Lb1 from the reflecting layer 104 of the optical disk 100.

The signal processor 23 implements tracking control according to a so-called push-pull method, calculates a tracking error signal STEr according to an equation (2) presented below, and feeds it to the driving control unit 22.

$$STEr = (SDAr+SDDr) - (SBr+SDCr) \dots (2)$$

The tracking error signal STEr represents a magnitude of a deviation of the focus Fr from a target track in the reflecting layer 104 of the optical disk 100.

The driving control unit 22 produces a focusing driving signal SFDr on the basis of the red focusing error signal SFEr, feeds the focusing driving signal SFDr to the biaxial actuator 40A, and thus implements feedback control (that is, focusing control) in the objective lens 40 so that the red light beam Lr1 will be focused on the reflecting layer 104 of the optical disk 100.

The driving control unit 22 produces a tracking driving signal on the basis of the tracking error signal STEr, feeds the tracking driving signal STDr to the biaxial actuator 40A, and thus implements feedback control (that is, tracking control) in the objective lens 40 so that the red light beam Lr1 will be focused on a desired servo track in the reflecting layer 104 of the optical disk 100.

Incidentally, the biaxial actuator 40A is formed with a so-called voice coil motor that is a combination of, for example, a magnet and a coil, and designed to displace the objective lens 40 to a position dependent on a driving current applied to the coil.

As mentioned above, the servo optical system 30 irradiates the red light beam Lr1 to the reflecting layer 104 of the optical disk 100, and feeds the result of reception of the red light beam Lr2, that is the reflected light of the red light beam Lr1, to the signal processor 23. Accordingly, the driving control unit 22 implements focusing control and tracking control in the objective lens 40 so that the red light beam Lr1 will be focused on a target track in the reflecting layer 104.

(1-3-2) Light path of the blue light beam

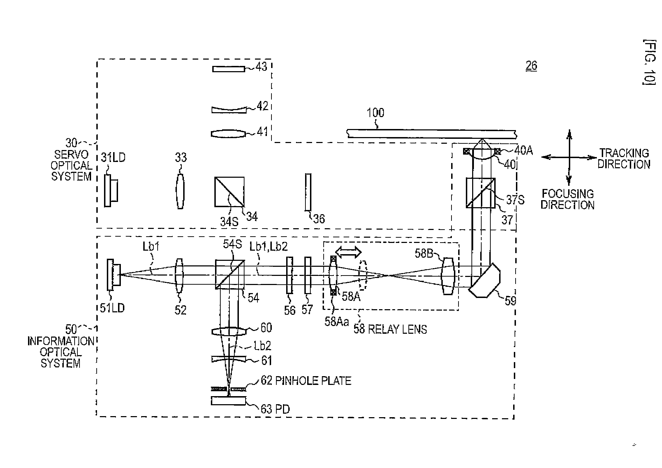

In the information optical system 50, as shown in Fig. 10 similar to Fig. 7, the blue light beam Lb1 emitted from the laser diode 51 via the objective lens 40 is irradiated to the optical disk 100, and the blue light beam Lb2 reflected from the optical disk 100 is received by a photodetector 63.

specifically, the laser diode 51 emits blue laser light having a wavelength of approximately 405 nm. In reality, the laser diode 51 emits the blue light beam Lb1 of a predetermined amount of light, which includes diverging rays, under the control of the system controller 21 (Fig. 4), and routes it to a collimator lens 52. The collimator lens 52 converts the blue light beam Lb1 from the diverging rays to parallel rays, and routes it to a polarization beam splitter 54.

The polarization beam splitter 54 uses the reflecting/transmitting surface 54S thereof to reflect or transmit a light beam according to the deflecting direction of the light beam. For example, the reflecting/transmitting surface 54S nearly totally transmits a light beam that is p-polarized light and nearly totally reflects a light beam that is s-polarized beam.

The polarization beam splitter 54 transmits the blue light beam Lb1 that is p-polarized light, and routes it to a quarter-wave plate 57 via a liquid crystal panel (LCP) 56 that corrects a spherical aberration or the like.

The quarter-wave plate 57 converts the blue light beam Lb1 from p-polarized light to, for example, left-handed circularly polarized light, and routes it to a relay lens 58.

The relay lens 58 uses a movable lens 58A to convert the blue light beam Lb1 from parallel rays to converging rays, uses a stationary lens 58B to adjust the degree of convergence or divergence (hereinafter called a converging state) of the blue light beam Lb1 that become diverging rays after converging, and then routes it to a mirror 59.

The movable lens 58A is moved in the light-axis direction of the blue light beam Lb1 by an actuator 58Aa. In reality, the relay lens 58 is designed so that the movable lens 58A is moved by the actuator 58Aa under the control of the driving control unit 22 (Fig. 4) in order to change the converging state of the blue light beam Lb1 emitted through the stationary lens 58B.

The mirror 59 reflects the blue light beam Lb1, reverses the deflecting direction of the blue light beam Lb1 that is circularly polarized light (for example, from left-handed circularly polarized light to right-handed circularly polarized light), deflects the advancing direction thereof, and routes it to the dichroic prism 37. The dichroic prism 37 uses the reflecting/transmitting surface 37S thereof to transmit the blue light beam Lb1, and routes it to the objective lens 40.

The objective lens 40 concentrates the blue light beam Lb1, and irradiates it to the optical disk 100. At this time, the blue light beam Lb1 is, as shown in Fig. 2, transmitted by the substrate 102, and focused on the inside of the reflecting layer 101.

The position of the focus Fb of the blue light beam Lb1 is determined with the converging state thereof attained when the blue light beam is emitted through the stationary lens 58B of the relay lens 58. Specifically, the focus Fb is shifted in the focusing direction within the recording layer 101 according to the position of the movable lens 58A.

More particularly, the information optical system 50 is designed so that the moving distance of the movable lens 58A and the shifting distance of the focus Fb of the blue light beam Lb1 will have a nearly proportional relationship.

For example, when the movable lens 58A is moved 1 mm, the focus Fb of the blue light beam Lb1 is shifted 30 μm.

Incidentally, the actuator 58Aa is formed with a so-called voice coil motor that is a combination of, for example, a magnet and a coil, and displaces the movable lens 58A to a position dependent on a relay driving current Uf applied to the coil.

In reality, in the information optical system 50, when the position of the movable lens 58A is controlled by the driving control unit 22 (Fig. 4), the depth d of the focus Fb (Fig. 2) of the blue light beam Lb1 in the recording layer 101 of the optical disk 100 (that is, the distance from the reflecting layer 104) is adjusted in order to square the focus Fb with a target mark position.

As mentioned above, the information optical system 50 irradiates the blue light beam Lb1 via the objective lens 40, which is servo-controlled by the servo optical system 30, in order to square the focus Fb in the tracking direction of the blue light beam Lb1 with the target mark position. Further, the depth d of the focus Fb is adjusted according to the position of the movable lens 58A included in the relay lens 58, whereby the focus Fb in the focusing direction is squared with the target mark position.

During recording processing during which information is recorded in the optical disk 100, the blue light beam Lb1 is concentrated on the focus Fb by the objective lens 50 in order to form the record mark RM at the focus Fb.

In contrast, during reproducing processing during which information recorded in the optical disk 100 is read, if the record mark RM is recorded near the target mark position, the blue light beam Lb1 concentrated on the focus Fb is reflected as the blue light beam Lb2 from the record mark RM, and routed to the objective lens 40. At this time, the deflecting direction of the blue light beam Lb2 that is circularly polarized light is reversed (for example, from right-handed circularly polarized light to left-handed circularly polarized light) due to the reflection from the record mark RM.

When the record mark RM is not recorded at the focus Fb, the blue light beam Lb1 diverges after converging on the focus Fb. The blue light beam Lb1 is then reflected from the reflecting layer 104, and routed as the blue light beam Lb2 to the objective lens 40. At this time, the rotating direction of the blue light beam Lb2 that is circularly polarized light is reversed (for example, from right-handed polarized light to left-handed polarized light) due to the reflection from the reflecting layer 104.

The objective lens 40 causes the blue light beam Lb2 to converge to some extent, and routes it to the dichroic prism 37. The dichroic prism 37 transmits the blue light beam Lb2, and routes it to the mirror 59.

The mirror 59 reflects the blue light beam Lb2 so as to reverse the polarizing direction of the blue light beam Lb1 that is circularly polarized light (for example, from left-handed circularly polarized light to right-handed circularly polarized light), and routes it to the relay lens 58.

The relay lens 58 converts the blue light beam Lb2 into parallel rays, and routes it to the quarter-wave plate 57. The quarter-wave plate 57 converts the blue light beam Lb2 that is circularly polarized light into linearly polarized light (for example, from right-handed circularly polarized light to s-polarized light), and routes it to the polarization beam splitter 57 via the LCP 56.

The polarization beam splitter 54 uses the reflecting/transmitting surface 54S thereof to reflect the blue light beam Lb2 that is s-polarized light, and routes it to a multi-lens 60. The multi-lens 60 concentrates the blue light beam Lb2 and routes it to a cylindrical lens 61. The cylindrical lens 61 applies an astigmatism to the blue light beam Lb2, and irradiates it to the photodetector 63 via a pinhole plate 62.

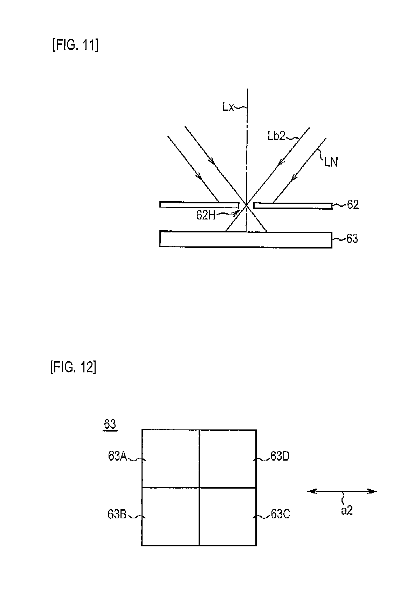

As shown in Fig. 11, the pinhole plate 62 is disposed so that the focus of the blue light beam Lb2 concentrated by the multi-lens 60 (Fig. 9) will be located in a bore 62H, and therefore transmits the blue light beam Lb2 without any change.

As shown in Fig. 12, the pinhole plate 62 nearly intercepts light that has a different focus and is reflected from, for example, the surface of the substrate 102 included in the optical disk 100, the record mark RM located at a position different from the target mark position, or the reflecting layer 104 (hereinafter called stray light (LN)). As a result, the photodetector 63 hardly detects an amount of light of the stray light LN.

As a result, the photodetector 63 is unsusceptible to the stray light LN, produces a detection signal SDb consistent with the amount of light of the blue light beam Lb2, and feeds it to the signal processor 23 (Fig. 6).

The photodetector 63 includes, as shown in Fig. 12, four detection fields 63A, 63B, 63C, and 63D segmented in the form of a lattice on the surface thereof to which the red light beam Lr2 is irradiated. A direction indicated with an arrow a2 (a sideway direction in the drawing) corresponds to a track traveling direction in which the blue light beam Lb1 propagates when irradiated to the recording layer 101.

The photodetector 63 uses the detection fields 63A, 63B, 63C, and 63D thereof to detect parts of the blue light beam Lb2, produces detection signals SDb (SDAb, SDBb, SDCb, and SDDb) according to detected amounts of light, and sends them to the signal processor 23 (Fig. 6).

The signal processor 23 uses a so-called astigmatism method to calculate a blue focusing error signal SFEb according to an equation (3) presented below.

$$SFEb = (SDAb+SDCb) - (SDBb+SDDb) \ldots (3)$$

The signal processor 23 produces a reproduction signal SRF according to an equation (4) presented below, and feeds it to the signal processor 23.

$$SRF = SDAb + SDBb + SDCb + SDDb \ldots (4)$$

In this case, the reproduction signal SRF highly precisely represents information recorded as the record mark RM in the optical disk 100. Therefore, the signal processor 23 produces reproductive information by performing predetermined demodulating processing or decoding processing on the reproduction signal SRF, and feeds the reproductive information to the system controller 21.

As mentioned above, the information optical system 50 receives the blue light beam Lb2 routed from the optical disk 100 to the objective lens 38, and feeds the result of reception to the signal processor 23.

(1-4) Information recording processing

As described previously, during information recording processing, the optical disk drive 20 records main data, which represents main information, in the form of the record mark RM, displaces the record mark RM in the focusing direction so as to record sub-data representing subordinate information.

More particularly, the signal processor 23 (Fig. 6) of the optical disk drive 20 separates recording main-data information Da represented by main data and recording sub-data information Db represented by sub-data from the recording information fed from the system controller 21, and feeds them to a recording control unit 70.

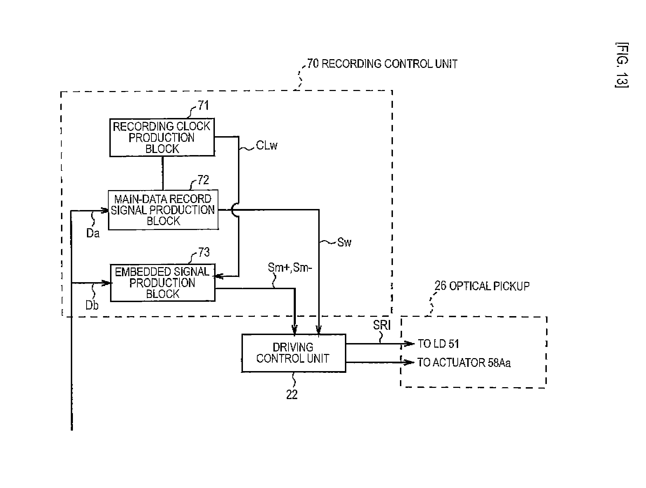

As shown in Fig. 13, a recording clock production block 71 included in the recording control unit 70 produces a recording clock CLw serving as a reference, and feeds it to a main-data record signal production block 72 and an embedded signal production block 73. At this time, the recording main-data information Da is fed to the main-data record signal production block 72, while the recording sub-data information Db is fed to the embedded signal production block 73.

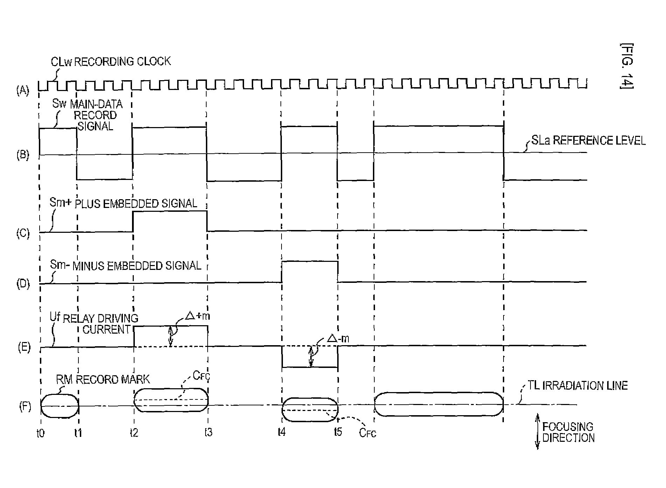

The main-data record signal production block 72 performs, as shown in Figs. 14(A) and (B), various kinds of pieces of signal processing including encoding processing and modulating processing on the recording main-data information Da, thus produces a main-data record signal Sw, which is a record signal, while squaring the rising and falling timings of the signal with those of the recording clock CLw, and feeds it to the embedded signal production block 73 and a laser control block 74.

The embedded signal production block 73 (Fig. 13) performs various kinds of pieces of signal processing including encoding processing and modulating processing on the recording sub-data information Db, produces a plus embedded signal Sm+ and a minus embedded signal Sm- while squaring the rising and falling timings of the signals with those of the main-data record signal Sw, and feeds them to the driving control unit 22.

As shown in Fig. 14(C), the plus embedded signal Sm+ represents the timing of displacing the record mark RM in a plus direction, that is, toward the incident surface 100A of the optical disk 100, and has the signal level thereof set to High over a period equivalent to the record mark RM that should be displaced in the plus direction.

As shown in Fig. 14(D), the minus embedded signal Sm-represents the timing of displacing the record mark RM in a minus direction, that is, toward the back surface 100B of the optical disk 100, and has the signal level thereof set to High over a period equivalent to the record mark RM that should be displaced in the minus direction.

The driving control unit 22 produces a relay driving current Uf by shifting a current value, which is associated with the mark recording layer U in which a target track is located, by a predetermined shift current value $\Delta \pm m$ during a period during which each of the plus embedded signal Sm+ and minus embedded signal Sm- goes High, and feeds it to the actuator 58Aa included in the relay lens 58.

The driving control unit 22 designates as a target mark position (that is, a target depth) a position deviated in the focusing direction (that is, a plus direction or a minus direction) by a predetermined out-of-focus quantity $\Delta Mc$ from the irradiation line TL in a target track, and irradiates the blue light beam Lb1 to the target mark position.

As a result, the optical disk drive 20 can deviate the record mark RM in the focusing direction from the irradiation line TL, to which the blue light beam Lb1 should originally be irradiated, according to the recording sub-data information Db, and can embed the recording sub-data information Db at a position in the focusing direction in the record mark RM representing the recording main-data information Da.

For example, at a time point t0, the main-data record signal production block 72 raises the signal level of the main-data record signal Sw from a Low level to a High level on the basis of the recording main-data information Da (Fig. 14(B)). At this time, the embedded signal production block 73 retains the signal levels of the plus embedded signal Sm+

and minus embedded signal m- at the Low level on the basis of the recording sub-data information Db (Figs. 14(C) and (D)).

Accordingly, the driving control unit 22 retains the relay driving current Uf at a current value associated with the mark recording layer Y. The laser control block 74 produces a laser driving current according to the main-data record signal Sw, and feeds it to the laser diode 51. As a result, the blue light beam Lb1 emitted from the laser diode 51 is irradiated to the irradiation line TL, and the record mark RM is formed on the irradiation line TL (Fig. 14(F)).

At a time point t1, the main-data record signal production block 72 lowers the signal level of the main-data record signal Sw from the High level to the Low level on the basis of the recording main-data information Da (Fig. 14 (B)). At this time, the laser control block 74 produces a laser driving current according to the main-data record signal Sw, and almost ceases emission of the blue light beam Lba from the laser diode 51.

At a time point t2, the main-data record signal production block 72 raises the signal level of the main data record signal Sw from the Low level to the High level on the basis of the recording main-data information Da (Fig. 14(B)). At this time, the embedded signal production block 73 raises the signal level of the plus embedded signal Sm+ to the High level on the basis of the recording sub-data information Db (Fig. 14(C)), while retains the minus embedded signal m- at the Low level (Fig. 14(D)).

Accordingly, the driving control unit 22 adds the predetermined shift current value ∆+m to the current value of the relay driving current Uf associated with the mark recording layer Y. The laser control block 74 produces a laser driving current according to the main-data record signal Sw, and feeds it to the laser diode 51. As a result, the blue light beam Lb1 emitted from the laser diode 51 is irradiated to a position deviated in a plus direction from the irradiation line TL by the out-of-focus quantity ∆Mc, and the record mark RM is formed at the deviated position (Fig. 14(F)).

At a time point t3, the main-data record signal production block 72 lowers the signal level of the main-data record signal Sw from the High level to the Low level on the basis of the recording main-data information Da (Fig. 14 (B)). At this time, the embedded signal production block 73 lowers the signal level of the plus embedded signal Sm+ from the High level to the Low level. The laser control block 74 produces a laser driving current according to the main-data record signal Sw so as to almost cease emission of the blue light beam Lb1 from the laser diode 51.

At a succeeding time point t4, the main-data record signal production block 72 raises the signal level of the main-data record signal Sw from the Low level to the High level on the basis of the recording main-data information Da (Fig. 14(B)). At this time, the embedded signal production block 73 retains the signal level of the plus embedded signal Sm+ at the Low level on the basis of the recording sub-data information Db (Fig. 14(C)), while raises the minus embedded signal m- to the High level (Fig. 14(D)).

Accordingly, the driving control unit 22 adds the predetermined shift current value ∆-m to the current value of the relay driving current Uf associated with the mark recording layer Y. The laser control block 74 produces a laser driving current according to the main-data record signal Sw, and feeds it to the laser diode 51. As a result, the blue light beam Lb1 emitted from the laser diode 51 is irradiated to a position deviated in a minus direction from the irradiation line TL by the out-of-focus quantity ∆Mc, and the record mark RM is formed at the deviated position (Fig. 14(F)).

At a time point t5, the main-data record signal production block 72 lowers the signal level of the main-data record signal Sw from the High level to the Low level on the basis of the recording main-data information Da (Fig. 14 (B)). At this time, the embedded signal production block 73 lowers the signal level of the plus embedded signal Sm- from the High level to the Low level. The laser control block 74 produces the laser driving current according to the main-data record signal Sw so as to almost cease emission of the blue light beam Lb1 from the laser diode 51.

As mentioned above, the optical disk drive 20 irradiates the blue light beam Lb1 to a target track at the timing corresponding to the timing of the recording main-data information Da, and thus forms the record mark RM so as to record the recording main-data information Da in the recording layer 101. The optical disk drive 20 deviates each record mark RM in the focusing direction according to the recording sub-data information Db, and thus records the recording sub-data information Da in the recording layer 101.

While displacing the objective lens 40 on the basis of the red focusing error signal SFEr, the optical disk drive 20 controls the movable lens 58A included in the relay lens 58 so that the blue light beam Lb1 will be irradiated to a target mark position separated by a depth d with the reflecting layer 104 as a reference. At this time, the optical disk drive 20 designates as the target mark position a position deviated in the focusing direction from the irradiation line TL by the out-of-focus quantity ∆Mc.

Accordingly, the optical disk drive 20 displaces the objective lens 40 so that the red light beam Lr1 will be focused on the reflecting layer 104. Thereafter, control should be implemented so that the focus Fb of the blue light beam Lb1 will be located at a target depth corresponding to the target mark position with the red light beam reflecting layer 104 as a reference. Therefore, the optical disk drive 20 can embed sub-data according the position in the focusing direction of the record mark RM merely by implementing simple control so as to slightly displace the movable lens 58A according to the recording sub-data information Db.

(1-5) Information reproducing processing

During information reproducing processing, the signal processor 23 included in the optical disk drive 20 produces reproductive main-data information Ra corresponding to the recording main-data information Da and reproductive sub-data information Rb corresponding to the recording sub-data information Db on the basis of the blue light beam Lb1, and feeds them as reproductive information to the system controller 21.

More particularly, the signal processor 23 produces a reproduction signal SRF and a blue focusing error signal SFEb from a detection signal SDb, and feeds them to a reproduction control unit 80.

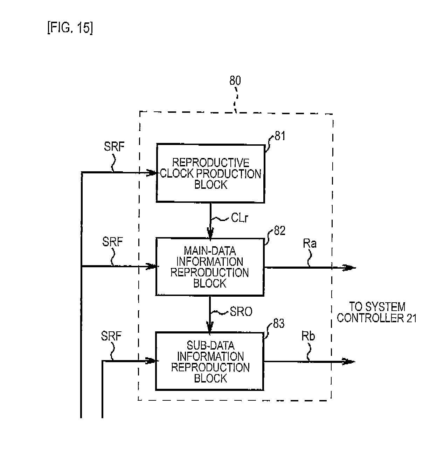

As shown in Fig. 15, the reproduction control unit 80 feeds the reproduction signal SRF to a reproductive clock production block 81 and a main-data information reproduction block 82, while feeds the blue focusing error signal SFEb to a sub-data information reproduction block 83.

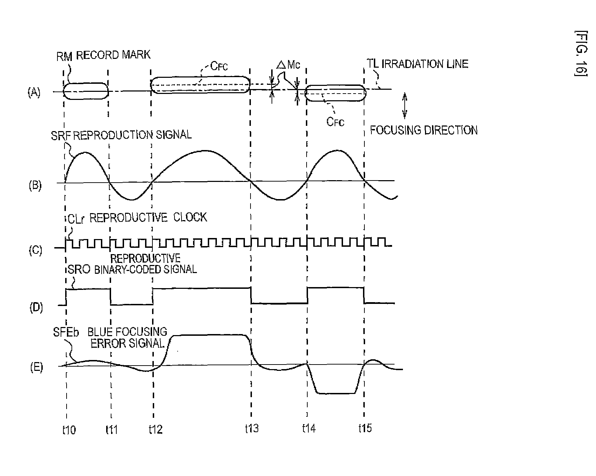

As shown in Figs. 16(B) and (C), the reproductive clock production block 81 uses, for example, a phase-locked loop (PLL) circuit to extract a reproductive clock CLr from the reproduction signal SRF, and feeds it to the main-data information reproduction block 82.

As shown in Fig. 16(D), the main-data information reproduction block 82 binary-codes the reproduction signal SRF with the reproductive clock CLr as a reference so as to produce a reproductive binary-coded signal SRO, and feeds it to the sub-data information reproduction block 83. In addition, the main-data information reproduction block 82 performs various kinds of pieces of signal processing including demodulating processing and decoding processing on the reproductive binary-coded signal SRO so as to produce the reproductive main-data information Ra, and feeds it to the system controller 21.

The sub-data information reproduction block 83 recognizes the presence or absence of the record mark RM according to the rising and falling timings of the reproductive binary-coded signal SRO (that is, the length of the record mark RM and the length of a space in which the record mark RM is not formed), detects the presence or absence of a deviation of the record mark RM in the focusing direction on the basis of the signal level of the blue focusing error signal SFEb obtained from the record mark RM, and produces a deviation detection signal (not shown).

The sub-data information reproduction block 83 performs various kinds of pieces of signal processing including demodulating processing and decoding processing on the deviation detection signal so as to produce the reproductive sub-data information Rb, and feeds it to the system controller 21.

For example, at a time point t10, since the reproductive binary-coded signal SRO rises from the Low level to the High level, the sub-data information reproduction block 83 acknowledges that the blue light beam Lb1 is irradiated to the record mark RM (that is, the record mark RM is detected),

At a time point t11 since the reproductive binary-coded signal SRO falls from the High level to the Low level, the main-data information reproduction block 82 acknowledges that irradiation of the blue light beam Lb1 to the record mark RM has been completed, and recognizes the record mark RM as a 3T mark. At this time, the sub-data information reproduction block 83 calculates a mean value of signal levels of the blue focusing error signal SFEb obtained from the time point t10 to the time point t11 (hereinafter, called an SFE mark mean value).

Further, the sub-data information reproduction block 83 decides whichever of three levels the SFE mark mean value ranks.

Specifically, the sub-data information reproduction block 83 decides whether the SFE mark mean value is equal to or larger than a first sub-information threshold, falls below the first information threshold and is equal to or larger than a second sub-information threshold, or falls below the second sub-information threshold.

More particularly, if the sub-data information reproduction block 83 decides at the time point t11 that the SFE mark mean value falls below the first information threshold and is equal to or larger than the second sub-information threshold, the sub-data information reproduction block 83 acknowledges that the record mark RM is formed on the irradiation line TL, and sets the signal level of the deviation detection signal to 0.

If the reproductive binary-coded signal SRO rises from the Low level to the High level at a time point t12, and lowers to the Low level at a time point t13, the main-data information reproduction block 82 recognizes the space as a 3T space. At this time, the sub-data information reproduction block 83 decides, similarly to it does at the time point t11, whichever of three levels the SFE mark mean value ranks.

At the time point t13, the main-data information reproduction block 82 recognizes the record mark RM as a 7T mark. At this time, if the sub-data information reproduction block 83 decides that the SFE mark mean value is equal to or larger than the first threshold, the sub-data information reproduction block 83 acknowledges that the record mark RM is formed while being deviated in a plus direction, and sets the signal level of the deviation detection signal to + 1.

If the reproductive binary-coded signal SRO rises from the Low level to the High level at a time point t14, and lowers to the Low level at a time point t15, the main-data information reproduction block 82 recognizes the space as a 4T space and recognizes the record mark RM as a 4T mark.

At this time, the sub-data information reproduction block 83 decides, similarly to it does at the time point t11, whichever of the three levels the SFE mark mean value ranks. If the sub-data information reproduction block 83 decides that the SFE mark mean value falls below the second threshold, the sub-data information reproduction block 83 acknowledges that the record mark RM is formed while being deviated in a minus direction, and sets the signal level of the deviation detection signal to - 1.

As mentioned above, the optical disk drive 20 produces the reproduction signal SRF on the basis of the blue light beam Lb2 so as to reproduce the reproductive main-data information Ra corresponding to the recording main-data information Da. The optical disk drive 20 detects the presence or absence of a deviation of the record mark RM from the irradiation line TL on the basis of the blue focusing error signal SFEb, and thus reproduces the reproductive sub-data information Rb corresponding to the recording sub-data information Db.

The optical disk drive 20 detects the presence or absence of a deviation of the record mark RM on the basis of the blue focusing error signal SFEb while implementing focus control in the objective lens 40 on the basis of the red focusing error signal SFEr.

Specifically, the optical disk drive 20 does not implement control so that the blue light beam Lb1 will be irradiated to the center of the record mark RM according to the blue focusing error signal SFEb. Therefore, the amplitude of the blue focusing error signal SFEb will depend on the out-of-focus quantity $\Delta Mc$ by which the record mark RM is deviated from the irradiation line TL.

Accordingly, the optical disk drive 20 can irradiate the blue light beam Lb1 nearly to the irradiation line TL all the time, and can therefore largely vary the blue focusing error signal SFEb according to the out-of-focus quantity $\Delta Mc$ of the record mark RM from the irradiation line TL. As a result, the optical disk drive 20 can reliably detect a slight deviation of the record mark RM from the irradiation line TL, and can reproduce sub-data with high precision.

(1-6) Actions and advantage

In the foregoing constitution, the optical disk drive 20 concentrates the blue light beam Lb1 serving as information light, and irradiates it to the optical disk 100 serving as an optical information recording medium. At this time, the optical disk drive 20 shifts the focus Fb of the blue light beam Lb1 in the focusing direction in which the objective lens 40 recedes from or approaches to the optical information recording medium, and thus shifts the focus Fb of the blue light beam Lb1 to a target depth to which the blue light beam Lb1 should be irradiated.

The optical disk drive 20 forms the record mark RM along the virtual irradiation line TL in the optical disk 100 by controlling the laser diode 51, which is a light source, according to the recording main-data information Da based on main data. The optical disk drive 20 shifts a target depth in the focusing direction according to the recording sub-data information Db based on sub-data, and thus forms the record mark RM with the center of the record mark RM deviated from the irradiation line TL in the focusing direction.

In the recording layer 101 of the optical disk 100, the three-dimensional record mark RM is supposed to be formed in the thick recording layer 101, and a space in which the record mark RM is not formed exists in the focusing direction.

In the optical disk drive 20, the space in the focusing direction is utilized so that the record mark RM can be formed while being deviated in the focusing direction. Thus, the storage capacity of the recording layer 101 for main data will not be varied but sub-data can be recorded. Namely, the optical disk drive 20 permits substantial improvement of the storage capacity of the optical disk 100.

In the recording layer 101, the height of the track TR is larger than the height RMh of the record mark RM, and the record marks RM are supposed to be equidistantly formed in the focusing direction.

The optical disk drive 20 records sub-data by slightly deviating the center line $C_{FR}$ of the record mark RM from the irradiation line TL. Eventually, since the record mark RM is deviated from the irradiation line TL, the necessity of closely disposing the record marks RM is nearly obviated. The optical disk drive 20 can therefore suppress a so-called crosstalk that is interference of the record marks RM during information reproduction.

The optical disk drive 20 can form the record mark RM along the irradiation line TL, though the center line $C_{FR}$ of the record mark RM deviates from the irradiation line TL. Therefore, during information reproducing processing, an amount of light of the blue light beam Lb2 is hardly affected and the excellent reproduction signal SRF can be produced.

Further, the optical disk drive 20 uses the biaxial actuator 40A serving as an objective lens drive unit to drive the objective lens 40, and uses the objective lens 40 to concentrate the red light beam Lr1 that is servo light for focus control. The optical disk drive 20 drives the objective lens 40 so that the red light beam Lb1 will be focused on the reflecting layer 104 included in the optical disk 100.

At this time, the optical disk drive 20 uses the movable lens 58A serving as a focus shift unit to separate the focus Fb of the blue light beam Lb1 from the focus Fr of the red light beam Lr1 by an arbitrary distance, and thus squares the focus Fb of the blue light beam Lb1 with a target depth to which the blue light beam Lb1 should be irradiated.

Therefore, the optical disk drive 20 can square the focus Fb of the blue light beam Lb1 with the irradiation line TL on the basis of the red light beam Lr1. Eventually, the focus Fb can be squared with a target mark position by implementing simple control to drive the movable lens 58A according to the out-of-focus quantity $\Delta Mc$.

In short, the optical disk drive 20 merely shifts the position of the movable lens 58A according to the mark recording layer Y in which the record mark RM should be formed, but does not normally displace the movable lens 58A during a period during which the record mark RM is formed in the same mark recording layer Y. Therefore, the optical disk drive 20 should merely slightly displace the movable lens 58A, which is hardly displaced, according to sub-data. A large load need not be imposed on the movable lens 58A.

Now, for example, for displacing the center line $C_{FC}$ of the record mark RM, the peak of the blue focusing error signal SFEb is detected as information during information reproducing processing. In this case, there is a possibility that a noise abruptly generated in the blue focusing error signal SFEb cannot be discriminated from information.

In contrast, the optical disk drive 20 forms each record mark RM with the center line $C_{FC}$ of the record mark RM deviated from the irradiation line TL in the focusing direction. Therefore, the optical disk drive 20 can vary the signal level of the blue focusing error signal SFEb over a period corresponding to the record mark RM, and can therefore reliably reproduce information embedded in the record mark RM.

The optical disk drive 20 drives the movable lens 58A disposed among diverging rays, and can thus freely shift the focus Fb in the focusing direction without any restriction imposed on the moving distance of the movable lens 58A.

Further, the optical disk drive 20 produces the reproduction signal SRF on the basis of the blue light beam Lb2 serving as a reflected light beam that is the blue light beam Lb1 reflected from the optical disk 100, and thus detects the presence or absence of the record mark RM formed along the virtual irradiation line TL in the optical disk 100. Based on the presence or absence of the record mark RM, the optical disk drive 20 reproduces main data as the reproductive main-data information Ra.

Based on an amount of light of the blue light beam Lb1, the optical disk drive 20 produces the blue focusing error signal SFEb, which represents the out-of-focus quantity between the focus Fb of the blue light beam Lb1 and the record mark RM in the focusing direction in which the objective lens 40 recedes from or approaches to the optical disk 10. The optical disk drive 20 thus detects the out-of-focus quantity. The optical disk drive 20 reproduces sub-data, which is recorded by deviating the center line $C_{FC}$ of the record mark RM from the irradiation line TL, as the reproductive sub-data information Rb on the basis of the blue focusing error signal SFEb.

Thus, the optical disk drive 20 can reproduce both main data and sub-data that are recorded as the record mark RM in the recording layer 101.

Further, the optical disk drive 20 drives the objective lens 40 so that the red light beam Lr1 will be focused on the reflecting layer 104 of the optical disk 100, and squares the focus Fb of the blue light beam Lb1 with a target depth, to which the blue light beam Lb1 should be irradiated, by separating the focus Fb of the blue light beam Lb1 from the focus Fr of the red light beam Lr1 by an arbitrary distance.

Accordingly, the optical disk drive 20 can implement focusing control for the focus Fb using the red focusing error signal SFEr that is unsusceptible of deviation of the record mark RM from the irradiation line TL, and can therefore implement the focusing control highly precisely similarly to the conventional optical disk drive.

The optical disk drive 20 is an optical information recording/reproducing apparatus capable of recording or reproducing main data and sub-data in or from the recording layer 101. Accordingly, the optical disk drive 20 separates recording information into main data and sub-data at a predetermined ratio, and records or reproduces the data items. Therefore, the recording capacity of the optical disk 100 can be increased.

The optical disk 100 includes the reflecting layer 104 that reflects at least part of the red light beam Lr1 to be irradiated for positional control. Since the optical disk 100 allows the optical disk drive 20 to implement focusing control in the objective lens 40 using the red light beam Lr1, the blue focusing error signal SFEb whose signal level is varied by embedding sub-data need not be used for the focusing control. Therefore, the optical disk 100 makes it possible to reproduce main data and sub-data without affecting the focusing control to be implemented in the objective lens 40 during information reproducing processing.

Since positional information is recorded with a groove and a land, which are irregularities, in the optical disk 100, the optical disk drive 20 can readily implement tracking control.

According to the foregoing constitution, the optical disk drive 20 can displace the record mark RM, which represents main data, toward a space in the focusing direction which is created inside the recording layer 101 which is thick and in which the three-dimensional record mark RM is formed.

Thus, the optical disk drive 20 can embed sub-data in the record mark with a displacement in the focusing direction. Accordingly, an optical information recording apparatus and an optical information recording method capable of recording sub-data, an optical information reproducing apparatus and an optical information reproducing method capable of reproducing the sub-data, and an optical information recording medium in which the sub-data is recorded can be realized.

(1-7) Other Embodiments

In the foregoing first embodiment, a description has been made of a case where the movable lens 58A is adopted as a focus shift unit that shifts the focus Fb of the blue light beam Lb1. The present invention is not limited to this case. In short, a spherical aberration generation means that applies a spherical aberration to the blue light beam Lb1 will do. For example, any of various optical elements including a diffractive element, a phase modulation element such as a liquid crystal element, and an expander which change the phase of the blue light beam Lb1 will do. These optical elements may be made movable.

In the aforesaid first embodiment, a description has been made of a case where each record mark RM is formed with the center line $C_{FC}$ of the record mark RM deviated in the focusing direction. The present invention is not limited to this case. For example, the record mark RM may be formed by gradually deviating the center line $C_{FC}$ within the record mark RM, so that the record mark RM will be inclined in the focusing direction with respect to the irradiation line TL. Multiple out-of-focus quantities ΔMc may be designated in order to deviating the center line $C_{FC}$ of the record mark RM in multiple stages in the same direction.

In the aforesaid first embodiment, a description has been made of a case where after the record mark RM is formed with the center line $C_{FC}$ of the record mark RM deviated from the irradiation line TL, the next record mark RM is formed with the center line $C_{FC}$ of the next record mark RM displaced with respect to the position of the deviated center line. The present invention is not limited to this case. For example, after the record mark RM is formed while being deviated in a plus direction, if the next record mark RM is formed while being aligned with the irradiation line TL, the same advantage as that of the aforesaid embodiment can be provided. Otherwise, the record mark RM and the next record mark RM may be successively formed while being deviated from each other in the same direction (plus or minus direction).

In the aforesaid first embodiment, the present invention is applied to the optical disk 100 in which the record mark RM is formed with a bubble in the recording layer 101 according to the blue light beam Lb1 having a predetermined intensity or more. The present invention is not limited to the optical disk. The present invention may be applied to, for example, an optical disk in which a hologram is formed in advance all over the recording layer 101 whose refractive index varies with irradiation of light, and the record mark RM is formed by destroying the hologram through irradiation of the blue light beam Lb1, or an optical disk 100 in which the three-dimensional record mark RM having a three-dimensional shape is formed by changing a refractive index.

Further, the blue light beam Lb emitted from a light source may be separated into the blue light beams Lb1 and Lb2, and irradiated to the same target mark position through both the surfaces of a voluminal medium 121v (not shown) in order to form the record mark RM with a hologram. The constitution of this type of optical disk drive is described in the aforesaid patent document 2.

Further, in the aforesaid first embodiment, a description has been made of a case where the red light beam Lr1 whose wavelength is different from that of the blue light beam Lb1 is adopted as servo light. The present invention is not limited to this case. For example, the blue light beam Lb1 may be separated into portions, and one of the portions may be irradiated as a servo light beam to the reflecting layer. In this case, a film that reflects at least part or the whole of the blue light beam Lb1 and red light beam Lr1 is adopted as the reflecting layer.

Further, in the aforesaid first embodiment, a description has been made of a case where the reflecting layer 104 is interposed between the substrate 103 located on a side opposite to the object lens 40 and the recording layer 101. The present invention is not limited to this case. In short, as an optical disk, a disk having at least the recording layer and reflecting layer will do.

For example, the reflecting layer may be interposed between the substrate 102 located on the side of the objective lens 40 and the recording layer 101. In this case, the reflecting layer 104 is formed as a reflecting/transmitting layer that reflects 100 % light (red laser light) whose wavelength is used for servo control of the objective lens 40 and transmits 100 % light (blue laser light) whose wavelength is used for recording or reproduction. Thus, the red light beam Lr1 is reflected in order to produce the red light beam Lr2, and the blue light beam Lb1 is irradiated to a target mark position.

Further, in the aforesaid first embodiment, a description has been made of a case where the optical pickup 26 has the construction shown in Fig. 7. The present invention is not limited to this case. The arrangement of optical parts, the number thereof, and the types thereof can be varied. For example, a quarter-wave plate may be interposed between the dichroic prism 37 and objective lens 40 in place of the quarter-wave plates 36 and 57. The positional relationship between the servo optical system 30 and information optical system 50 may be changed, and a dichroic prism that transmits the red light beam Lr1 and reflects the blue light beam Lb1 may be substituted for the optical dichroic prism 37.

Further, in the aforesaid first embodiment, a description has been made of a case where the record mark RM is formed in the optical disk 100 shaped like a disk. The present invention is not limited to this case. For example, the record mark RM may be recorded in an optical information recording medium shaped like a cube (parallelepiped).

Further, in the aforesaid first embodiment, a description has been made of a case where: the blue light beam Lb1 whose wavelength is 405 nm is adopted as information light; and the red light beam Lr1 whose wavelength is 660 nm is adopted as servo light. The present invention is not limited to this case. There is no limitation in the wavelength of the information light or servo light. Appropriate wavelengths can be selected based on the properties of the optical disk 100 and optical disk drive 20.

Further, in the aforesaid first embodiment, a description has been made of a case where the blue focusing error signal SFEb is produced based on the blue light beam Lb2 according to an astigmatism method. The present invention is not limited to this case. The blue focusing error signal SFEb may be produced according to any of various methods including, for example, a knife edge method and an internal/external differential method. The same applies to the red focusing error signal SFEr. The red tracking error signal STEr can be produced according to any of various methods including a differential push-pull (DPP) method and a differential phase detection (DPD) method.

Further, in the aforesaid first embodiment, a description has been made of a case where recording information is modulated through EFM modulation, and main data is recorded with the record mark RM whose mark length ranges from 3T to 11T and a space. The present invention is not limited to this case. The recording information may be modulated according to any of other various modulation methods. Information may be recorded in such a manner that one record mark RM represents 1-bit information and the presence or absence of the record mark RM represents 1 or 0.

Further, in the aforesaid first embodiment, a description has been made of a case where the movable lens 58A is moved to a position dependent on the relay driving current Uf. The present invention is not limited to this case. For example, the movable lens may be controlled so that it will be moved based on the driving current but will not be displaced until the driving current is fed next.

Further, in the aforesaid first embodiment, a description has been made of a case where the helical irradiation lines TL are imagined in the optical disk 100. The present invention is not limited to this case. For example, the irradiation lines TL may be concentrically or linearly imagined.

Further, in the aforesaid first embodiment, a description has been made of a case where the center line $C_{FC}$ of the record mark RM is deviated in the focusing direction from the irradiation line TL. The present invention is not limited to this case. The record mark RM may be formed with the center line $C_{FC}$ thereof deviated in the tracking direction that is the radial direction of the optical disk 100.

In this case, sub-data can be reproduced using the blue tracking error signal STEb, which is produced according to an equation (5) below, in the same manner as it is in the aforesaid embodiment. Even in this case, similarly to the aforesaid embodiment, the optical disk drive implements tracking control according to the tracking error signal STEr based on the red light beam Lr2. Therefore, the sub-data embedded in the record mark RM can be reproduced without any adverse effect imposed on the tracking control of the objective lens.

$$STEb = (SDAb+SDDb) - (SDBb+SDCb) \qquad (5)$$

Further, in the aforesaid first embodiment, a description has been made of a case where the objective lens 40 serving as an objective lens, the movable lens 58A serving as a focus shift unit, the main-data recording signal production block 72 and driving control unit 22 serving as a main-data recording unit, and the embedded signal production block 73 and driving control unit 22 serving as a sub-data recording unit are used to constitute the optical disk drive 20 serving as an optical information recording apparatus. The present invention is not limited to this case. Alternatively, the objective lens, focus shift unit, main-data recording unit, and sub-data recording unit that are realized with any other various components may be used to constitute the optical information recording apparatus in accordance with the present invention.

Further in the aforesaid first embodiment, a description has been described of a case where the laser diode 51 serving as a light source, the objective lens 40 serving as an objective lens, the photodetector 63 serving as a record mark detection unit, and the reproduction control unit 80 serving as a deviation detection unit are used to constitute the optical disk drive 20 serving as an optical information reproducing apparatus. The present invention is not limited to this case. Alternatively, the objective lens, focus shift unit, record mark detection unit, and deviation detection unit realized with any other various components may be used to constitute the optical information reproducing apparatus in accordance with the present invention.

Further, in the aforesaid first embodiment, a description has been made of a case where the recording layer 101 serving as a recording layer is used to form the optical disk 100 serving as an optical information recording medium. The present invention is not limited to this case. The optical recording medium in accordance with the present invention may be formed using the recording layer realized with any of other various components.

Further, in the aforesaid first embodiment, a description has been made of a case where the recording layer 101 serving as a recording layer and the reflecting layer 104 serving as a reflecting layer are used to form the optical disk 100 serving as an optical information recording medium. The present invention is not limited to this case. Alternatively, the recording layer and reflecting layer realized with other various components may be used to form the optical information recording medium in accordance with the present invention.

(2) Second Embodiment

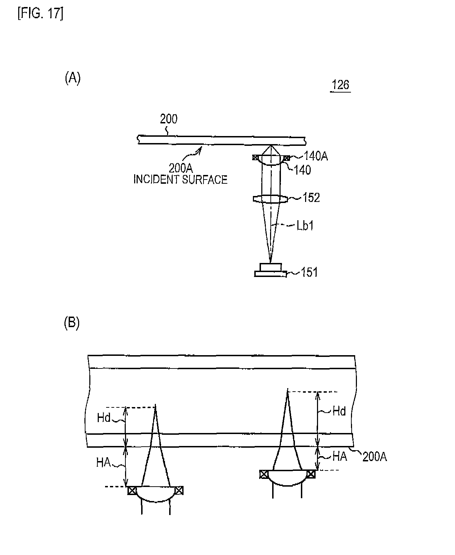

Fig. 17 to Fig. 21 show the second embodiment. The same reference numerals are assigned to components corresponding to those of the first embodiment shown in Fig. 1 to Fig. 16. An iterative description will be omitted. The second embodiment is different from the first embodiment in a point that an optical disk 200 does not include the reflecting layer 104 and in a point that an optical information recording apparatus 120 dedicated to recording is used to record information and an optical information reproducing apparatus dedicated to reproduction is used to reproduce information.

(2-1) Construction of an optical disk

The optical disk 200 (not shown) has a three-layer structure having both the surfaces of the recording layer 101 sandwiched between the substrates 102 and 103 with the recording layer 101, in which information is recorded, as a center.

Therefore, unlike the optical disk 100 employed in the first embodiment, the reflecting layer 104, and the lands and grooves in the reflecting layer 104 are not formed.

The thicknesses t1, t2, and t3 of the recording layer 101, and substrates 102 and 103 included in the optical disk 200 are identical to those in the optical disk 100. An iterative description will be omitted.

(2-2) Configuration of an optical information recording apparatus

The optical information recording apparatus 120 (not shown) is nearly identical to the optical disk drive 20 (Fig. 6) except a point that it does not include the reproduction control unit 80 and a point that an optical pickup 126 has a different construction. An iterative description will be omitted.

As shown in Fig. 17, the optical pickup 126 of the optical information recording apparatus 120 irradiates the blue light beam Lb1 to the optical disk 200.

More particularly, a laser diode 151 of the optical pickup 126 emits the blue light beam Lb1 of 405 nm under the control of the driving control unit 22, and routes it to a collimator lens 152.

The collimator lens 152 converts the blue light beam Lb1, which includes diverging rays, into parallel rays, and routes it to an objective lens 140. The objective lens 140 concentrates the blue light beam Lb1, and irradiates it to the optical disk 200.

In the optical pickup 126, the objective lens 140 includes a distance detector that detects a disk distance HA between the objective lens 140 and an incident surface 200A of the optical disk 200.

Assuming that HA denotes a focal length attained when the objective lens 140 concentrates the blue light beam Lb1, Hd denotes an incident surface depth that is a distance from the incident surface 200A to a target mark position, and n denotes a refractive index of the optical disk 200 (substrate 102 and recording layer 101), the disk distance HA is expressed as follows:

$$HA = HX - (Hd \times n) \hspace{3em} (6)$$

In the optical information recording apparatus 120, when the objective lens 140 is driven in the focusing direction in order to retain the disk distance HA at a designated disk distance HAs designated based on the incident surface depth Hd of the target mark position, the blue light beam Lb1 can be irradiated to the target mark position.

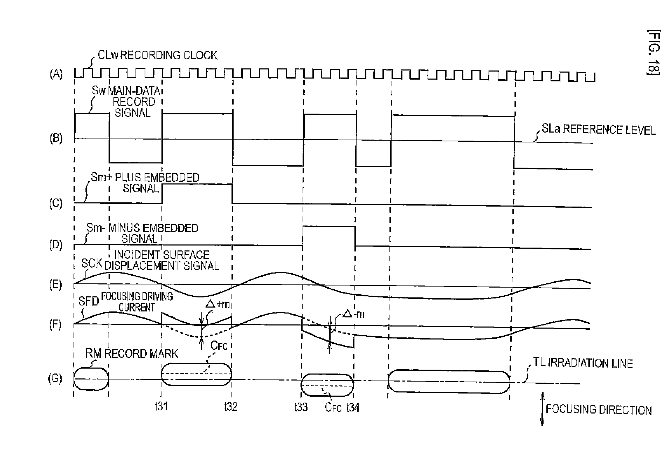

More particularly, the distance detector produces a distance signal consistent with the disk distance HA, and feeds it to the signal processor 23. As shown in Fig. 18(E), the signal processor 23 produces an incident surface displacement signal SCK, which represents a magnitude of a difference between the designated disk distance HAs and detected disk distance HA, on the basis of the distance signal, and feeds it to the driving control unit 22.

When the plus embedded signal Sm+ and minus embedded signal Sm- which are produced by the embedded signal production block 73 of the recording control unit 70 are fed in the same manner as they are in the first embodiment (Fig. 13), the driving control unit 22 superposes the incident surface displacement signal SCK, plus embedded signal Sm+, and minus embedded signal Sm- on one another so as to produce a focusing driving current SFD.

specifically, the driving control unit 22 produces a product by multiplying the incident surface displacement signal SCK by a predetermined coefficient. According to a period during which the signal level of the plus embedded signal Sm+ and minus embedded signal Sm- is High, the predetermined shift current value $\Delta m\pm$ is added to the product.

For example, at a time point t31, when the plus embedded signal Sm+ rises to be High, the shift current value $\Delta+m$ is added to the product in order to produce a focusing driving current SFD. At a time point 32, when the plus embedded signal Sm+ falls to be Low, the driving control unit 22 ceases addition of the shift current value $\Delta+m$, and the

product is calculated as the focusing driving current SFD as it is.

At a time point t33, when the minus embedded signal Sm-rises to be High, the driving control unit 22 produces the focusing driving current SFD by adding the shift current value △-m to the product. At a time point t34, when the plus embedded signal Sm- falls to be Low, the driving control unit 22 ceases addition of the shift current value △-m, and calculates the product as the focusing driving current SFD as it is.

The driving control unit 22 feeds the focusing driving current SFD to a biaxial actuator 140A. The biaxial actuator 140A drives the objective lens 140 to a position dependent on the focusing driving current SFD.

As a result, when both the plus embedded signal Sm+ and minus embedded signal Sm- take on the Low level, the optical information recording apparatus 120 can retain the disk distance HA at the designated disk distance HAs, and can square the focus Fb of the blue light beam Lb1 with the irradiation line TL.

When either the plus embedded signal Sm+ or the minus embedded signal Sm- is High, the optical information recording apparatus 120 drives the objective lens 140 so that the disk distance HA will become different from the designated disk distance HAs by a distance dependent on the shift current value △±m (that is, an out-of-focus quantity △Mc x a refractive index n).

Accordingly, the optical information recording apparatus 120 squares the focus Fb of the blue light beam Lb1 with a target mark position deviated by the out-of-focus quantity △Mc in the focusing direction (plus direction or minus direction) from the irradiation line TL.

As mentioned so far, the optical information recording apparatus 120 displaces the objective lens 140 with respect to the optical disk 200, which does not include the reflecting layer 104 serving as a reference, so as to shift the focus Fb of the blue light beam Lb1, and controls the disk distance HA so as to square the focus Fb with a target mark position.

Accordingly, the optical information recording apparatus 120 does not, unlike the first embodiment, require the servo optical system 30. Eventually, the construction of the optical pickup 126 is simplified.

(2-3) Configuration of the optical information reproducing apparatus

The optical information reproducing apparatus 130 (not shown) is nearly identical to the optical disk drive 20 (Fig. 6) except a point that it does not include the recording control unit 70 and a point that the constructions of an optical pickup 160 and a reproduction control unit 180 are different. An iterative description will be omitted.

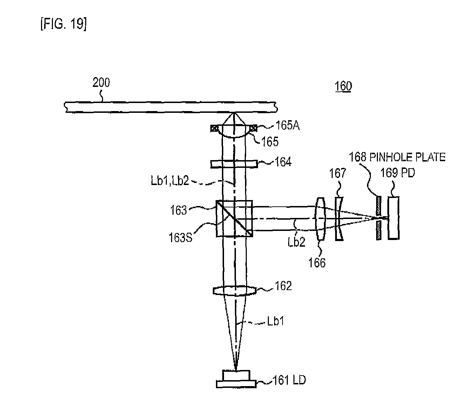

As shown in Fig. 19, the optical pickup 160 of the optical information reproducing apparatus 130 irradiates the blue light beam Lb1 to the optical disk 200, and receives the blue light beam Lb2 that is the blue light beam Lb1 reflected from the optical disk 200.

More particularly, the laser diode 161 of the optical pickup 160 emits the blue light beam Lb1 of 405 nm under the control of the driving control unit 22, and routes it to a collimator lens 162.

The collimator lens 162 converts the blue light beam Lb1, which includes diverging rays, into parallel rays, and routes it to a polarization beam splitter 163. The polarization beam splitter 163 uses the reflecting/transmitting surface 163S thereof to transmit or reflect the blue light beam Lb1 according to the deflecting direction, transmits the blue light beam Lb1 that is p-polarized light, and routes it to a quarter-wave plate 164.

The quarter-wave plate 164 converts the blue light beam Lb1, which is linearly polarized light, into circularly polarized light, and routes it to an objective lens 165. The objective lens 165 concentrates the blue light beam Lb1, and irradiates it to the optical disk 200.

When the record mark RM is formed near a target mark position in the optical disk 200, the blue light beam Lb1 is reflected from the record mark RM, and routed as a blue light beam Lb2, of which rotating direction is reverse to that of the blue light beam Lb1 and which advances in an opposite direction, to the objective lens 165. Further, the blue light beam Lb2 is converted into s-polarized light by the quarter-wave plate 164, and then routed to the polarization beam splitter 163.

The polarization beam splitter 163 reflects the blue light beam Lb2, which is s-polarized light, according to the deflecting direction thereof, and routes it to a condenser lens 166. The condenser lens 166 concentrates the blue light beam Lb2. An astigmatism is applied to the blue light beam Lb2 by a cylindrical lens 167. The blue light beam Lb2 is then irradiated to a photodetector 169 via a pinhole plate 168.

The photodetector 169 has the same construction as the photodetector 63 (Fig. 12) does, produces detection signals SDAb to SDBd in the same manner as the photodetector 63 does, and feeds them to the signal processor 23 (Fig. 6).

The signal processor 23 produces the reproduction signal SRF and blue focusing error signal SFEb according to the equations (3) and (4).

Supposedly, information is already recorded in the optical disk 200, and the record mark RM is formed therein. The optical information reproducing apparatus 160 uses the reflected light beam Lb2, which is the blue light beam Lb1 reflected from the record mark RM, to implement focusing control in the objective lens 165.

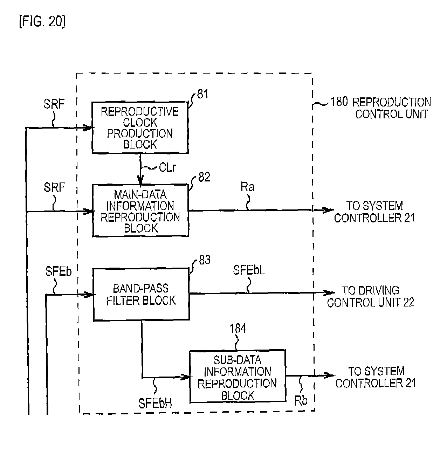

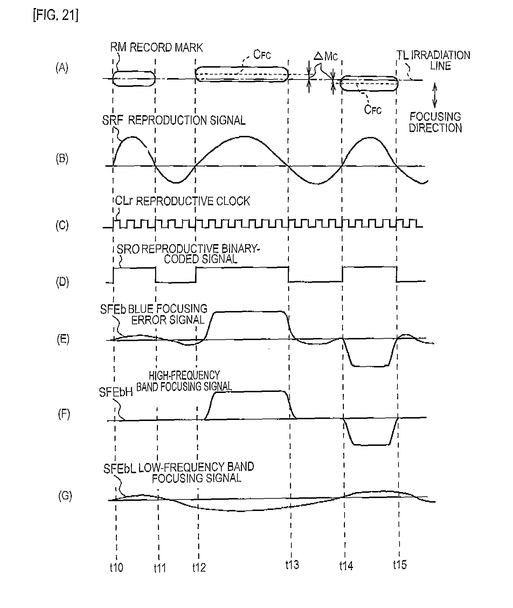

More particularly, the signal processor 23 of the optical information reproducing apparatus 130 feeds, as shown in Fig. 20, the reproduction signal SRF (Fig. 21(B)) to each of the reproductive clock production block 81 and main-data information reproduction block included in a reproduction control unit 180, and feeds the blue focusing error signal SFEb to a band-pass filter block 183.

The main-data information reproduction block 82 produces a reproductive binary-coded signal SRO (Fig. 21 (D)) while squaring the timing of production with the timing of the reproductive clock CLr (Fig. 21(C)) fed from the reproductive clock production block 81 in the same manner as that included in the first embodiment. Further, the main-data information reproduction block 82 produces the reproductive main-data information Ra on the basis of the reproductive binary-coded signal, and feeds it to the system controller 21.

When the blue focusing error signal SFEb (Fig. 21(E)) is fed to the band-pass filter block 183, the band-pass filter block 183 performs filtering processing on the blue focusing error signal SFEb in a predetermined frequency band. As a result, the blue focusing error signal SFEb is, as shown in Figs. 21(F) and (G), separated into a high-frequency band focusing signal SFEbH having a relatively high frequency and a low-frequency band focusing signal SFEbL having a relatively low frequency.

When the objective lens 165 is made stationary, the optical information reproducing apparatus 130 irradiates the focus Fb of the blue light beam Lb1 to the same position all the time. The irradiated position gradually changes along the track TR according to the rotation of the optical disk 200.

A deviation of the focus Fb from the record mark RM derived from a surface shake caused by a distortion of the optical disk 200 or a trouble occurring during mounting is often manifested as a low frequency at intervals of a cycle dependent on the rotation of the optical disk 200.

As described previously, in the optical disk 200, each record mark RM is formed hile being deviated in the focusing direction from the irradiation line TL. Thus, sub-data is embedded. Therefore, the deviation of the focus Fb from the record mark RM derived from the sub-data is manifested as a high frequency in association with each record mark RM.

Therefore, the high-frequency band focusing signal SFEbH that is a high-frequency component of the blue focusing error signal SFEb represents sub-data. The low-frequency band focusing signal SFEbL that is a low-frequency component of the blue focusing error signal SFEb represents the out-of-focus quantity of the focus Fb from the irradiation line TL.

The band-pass filter block 183 (Fig. 20) feeds the high-frequency focusing signal SFEbH to the sub-data information reproduction block 184, and feeds the low-frequency band focusing signal SFEbL to the driving control unit 22.

The sub-data information reproduction block 184 performs various kinds of pieces of signal processing on the high-frequency band focusing signal SFEbH in the same manner as that of the first embodiment does, thus produces the reproductive sub-data information Rb, and feeds it to the system controller 21.

The driving control unit 22 produces a focusing driving current SFD on the basis of the low-frequency band focusing signal SFEbL, and feeds it to the biaxial actuator 165A. Thus, the driving control unit 22 drives the objective lens 165 so that although the record mark RM is deviated from the irradiation line TL, the blue light beam Lb1 can be irradiated to the irradiation line TL.

As mentioned above, the optical information reproducing apparatus 130 separates the blue focusing error signal SFEb into the high-frequency band focusing signal SFEbH that is a high-frequency component and the low-frequency band focusing signal SFEbL that is a low-frequency component. The optical information production apparatus 130 produces the reproductive sub-data information Rb on the basis of the high-frequency band focusing signal SFEbH, and implements focusing control in the objective lens 165 on the basis of the low-frequency band focusing signal SFEbL.

Accordingly, the optical information reproducing apparatus 130 can reproduce sub-data embedded in the record mark RM without inclusion of the servo optical system 30 and distance detector, and can thus have the configuration thereof simplified.

The optical information reproducing apparatus 130 drives the objective lens 165 on the basis of the low-frequency band focusing signal SFEbL produced by removing the high-frequency component based on sub-data from the blue focusing error signal SFEb, and can irradiate the blue light beam Lb1 to the irradiation line TL. Eventually, the optical information reproducing apparatus 130 can vary the blue focusing error signal SFEb according to the sub-data.

(2-4) Actions and advantage

According to the foregoing constitution, the optical information recording apparatus 120 detects the disk distance HA between the objective lens 140 and the incident surface 200A of the optical disk 200 serving as an optical information recording medium, and thus detects the relative positional relationship between the objective lens 140 and optical disk 200. The optical information recording apparatus 120 drives the objective lens 140 so as to control the disk distance HA, and thus shifts the focus Fb of the blue light beam Lb1 to a target depth.

Accordingly, in the optical information recording apparatus 120, a distance detector that detects the disk distance HA should merely be substituted for the servo optical system 30, and numerous optical parts for use in servo control become unnecessary. The configuration of the optical information recording apparatus 120 can be simplified.

In the optical information recording apparatus 120, the objective lens 140 is driven in the focusing direction in order to shift the focus Fb of the blue light beam Lb1. Thus, in the optical information recording apparatus 120, unlike in the optical disk drive 20, the movable lens 58A need not be included. The configuration of the optical information recording apparatus 120 can be simplified.

Further, in the optical information reproducing apparatus 130, the objective lens 165 is driven in the focusing direction in order to shift the focus Fb of the blue light beam Lb1, and the blue focusing error signal SFEb representing an out-of-focus quantity is separated into the high-frequency band focusing signal SFEbH, which is a high-frequency component, and the low-frequency band focusing signal SFEbL that is a low-frequency component. In the optical information reproducing apparatus 130, sub-data is reproduced based on the high-frequency band focusing signal SFEbH, and the objective lens is driven based on the low-frequency band focusing signal SFEbL.

Accordingly, in the optical information reproducing apparatus 130, main data and sub-data are reproduced from the record mark RM in which the sub-data is embedded. Based on the blue light beam Lb2 reflected from the record mark RM, that is, using the record mark RM that has already been recorded, the objective lens 165 is subjected to focusing control so that the blue light beam Lb1 will be irradiated to the irradiation line TL.

In the optical information recording apparatus 120, during information recording processing, the record mark RM is formed with the center line $C_{FC}$ thereof deviated in the focusing direction from the irradiation line TL. Thereafter, the next recordmark RM is formed with the center line $C_{FC}$ thereof displaced with respect to the position of the deviated center line.

Accordingly, in the optical information recording apparatus 120, the record mark RM next to the record mark RM recorded while being deviated from the irradiation line TL can be recorded on the irradiation line TL or while being deviated in a reverse direction. The record mark RM recorded while being deviated from the irradiation line TL will not be continuously formed, but the record mark RM can be intermittently deviated from the irradiation line TL.

Accordingly, the optical information recording apparatus 120 can set a variation in a signal level, which is derived from sub-data represented by the blue focusing error signal SFEb produced during information reproducing processing performed in the optical information reproducing apparatus 130, to a high frequency, and can separate the blue focusing error signal SFEbH into the high-frequency focusing signal SFEbH and low-frequency band focusing signal SFEbL using the band-pass filter block 183.

According to the foregoing constitution, the optical information recording apparatus 120 drives the objective lens 140 on the basis of the relative positional relationship between the optical disk 200 and objective lens 140, and thus irradiates the blue light beam Lb1 to a target depth. Therefore, the optical information recording apparatus 120 does not require an optical part that receives light for servo control, and can have the configuration thereof simplified.

The optical information reproducing apparatus 130 drives the objective lens 165 on the basis of the blue light beam Lb2, and thus irradiates the blue light beam Lb1 to a target depth. Therefore, compared with a case where light for servo control is used separately, the optical information reproducing apparatus 130 does not require optical parts that irradiate or receive the light for servo control, and can have the configuration thereof simplified.

(2-5) Other Embodiments

In the aforesaid second embodiment, a description has been made of a case where the objective lens 140 included in the optical information recording apparatus 120 is provided with a distance detector that measures the disk distance HA. The present invention is not limited to this case. For example, a sensor that measures the disk distance HA may be disposed in a stage on which the optical disk 200 is placed or in the spindle motor 24.

A target mark position need not be determined based on the disk distance HA. For example, when a servo record mark for servo control is formed in advance in the optical disk 200, the servo record mark may be used to implement focusing control. The focusing control may be implemented by irradiating a servo light beam for servo control to the already recorded record mark RM.

In the aforesaid second embodiment, a description has been made of a case where the optical information reproducing apparatus 130 implements focusing control in the objective lens 165 on the basis of the blue focusing error signal SFEb. The present invention is not limited to this case. For example, similarly to the optical information recording apparatus 120, the disk distance HA measured by a distance detector may be used to implement the focusing control.

Further, in the aforesaid second embodiment, a description has been made of a case where the low-frequency band focusing signal SFEbL is used to implement focusing control in the objective lens 165. The present invention is not limited to this case. For example, when the amplitude of a high-frequency component of the blue focusing error signal SFEb representing sub-data is relatively small, the blue focusing error signal SFEb may be used as it is. In this case, the high-frequency focusing signal SFEbH is fully amplified in order to reproduce the sub-data.

(3) Application of the present invention

Next, an applied example of the present invention will be described below by presenting a concrete example. For convenience' sake, the reference numerals employed in the optical disk 100 and optical disk drive 20 in accordance with the first embodiment will be used to make a description. However, the second embodiment can also be applied.

(3-1) Copy prevention system

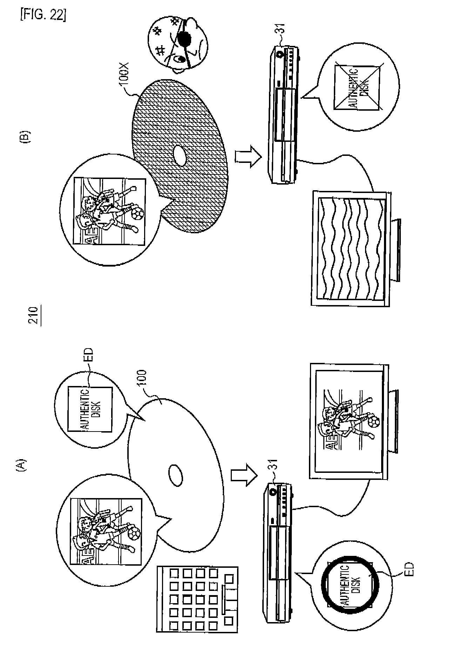

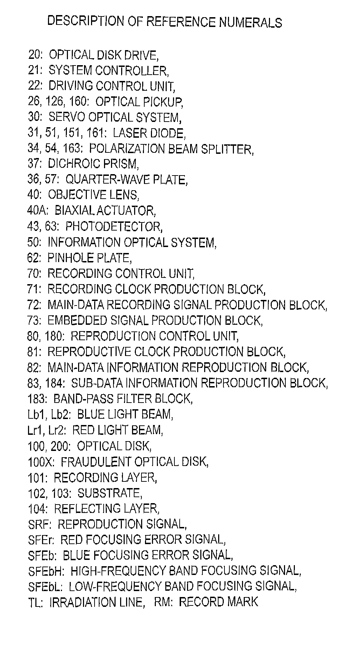

As shown in Fig. 22(A), in a copy prevention system 210, main data such as video data or music data is recorded in the optical disk 100 in the form of the record marl RM. In the copy prevention system 210, a disk identification code ED signifying that the optical disk 100 is an authentic optical disk 100 is modulated according to a predetermined method, and recorded as sub-data in the form of a modulated identification code EDr. The modulated identification code EDr is recorded in, for example, a table-of-contents (EOC) field on an innermost circumference by deviating the record mark RM from the irradiation line TL in the focusing direction.

If the optical disk drive 20 that reproduces the optical disk 100 can reproduce the disk identification code ED from the modulated identification code EDr read from the optical disk 100, the optical disk drive 20 decides that the optical disk has been legitimately fabricated, and reproduces main data recorded in the optical disk 100.

In contrast, as shown in Fig. 22(B), if the modulated identification code EDr is not recorded in the optical disk and the disk identification code ED cannot be reproduced, the optical disk drive 20 decides that the optical disk is a fraudulent optical disk 100X such as a so-called pirated disk, which is illegally duplicated, but is not an authentic optical disk, and does not reproduce main data from the fraudulent optical disk 100X.

In the optical disk 100, since the out-of-focus quantity ΔMc is set to a small value, the optical disk drive 20 that records the record mark RM is requested to implement precise focusing control, and can discourage a third party from fabricating the fraudulent optical disk 100X.

In this case, in the optical disk 100, preferably, the disk identification code ED is modulated according to the predetermined method and recorded as the modulated identification code EDr. Supposing that a third party tries to record the modulated identification code EDr in the fraudulent optical disk 100X, it becomes necessary for the third party to modulate the disk identification code ED according to the same method as the method adopted by the optical disk 100. As a result, the optical disk 100 further discourages the third party from recording the modulated identification code EDr. As for the modulating method, refer to the patent document 1 or the like.

Specifically, in the copy prevention system 210, a process of fabricating the fraudulent optical disk 100X that is reproducible can be made very hard to do, and sale of the fraudulent optical disk 100X by a third party can be substantially prevented.

As another copy prevention system 211 (not shown), main data may be encrypted and recorded in the form of the record mark RM and space, and key information necessary to decrypt the main data may be recorded as sub-data. In this case, both the main data and sub-data are recorded all over the optical disk 100.

Further, as sub-data, data necessary to select or decode key information may be recorded, or any of various data items necessary for decryption may be recorded.

(3-2) Other applied example

Further, the present invention may be applied to any system other than the copy prevention system.

For example, address information may be recorded as sub-data. In this case, main data is recorded in the form of the record mark RM in the leading part of a sector, and address information is embedded in the record mark RM by displacing the record mark RM in the leading part with respect to the irradiation line TL. This obviates the necessity of recording the address information as main data. Therefore, the recording capacity of the optical disk 100 can be improved.

Incidentally, subordinately generated information such as the reproductive frequency of data or the copying frequency may be recorded as sub-data.

Industrial Applicability

The present invention can be applied to optical disk drives that record or reproduce a large amount of information, for example, a video content or an audio content, in or from a recording medium such as an optical disk.

**Claims**

**1.** An optical information recording apparatus comprising:

an objective lens that concentrates information light and irradiates it to an optical information recording medium in which information is recorded in the form of a record mark by irradiating the information light, which is emitted from a light source and has an intensity equal to or larger than a predetermined intensity, to the optical information recording medium;

a focus shift unit that shifts the focus of the information light in a focusing direction in which the objective lens recedes from or approaches to the optical information recording medium, and thus shifts the focus of the information light to a target depth to which the information light should be irradiated;

a main-data recording unit that controls the light source according to information based on the main data, and thus forms the record mark along a virtual irradiation line in the optical information recording medium; and

a sub-data recording unit that shifts the target depth in the focusing direction according to information based on the sub-data, and thus forms the record mark with the center thereof deviated in the focusing direction from the irradiation line.

2. The optical information recording apparatus according to Claim 1, further comprising an objective lens drive unit that drives the objective lens, wherein:

the objective lens concentrates servo light for focusing control;

the objective lens drive unit drives the objective lens so that the servo light will be focused on a reflecting layer included in the optical information recording medium; and

the focus shift unit separates the focus of the information light from the focus of the servo light by an arbitrary distance, and thus squares the focus of the information light with the target depth to which the information light should be irradiated.

3. The optical information recording apparatus according to Claim 2, wherein:

the sub-data recording unit forms each record mark with the center of the record mark deviated in the focusing direction from the irradiation line.

4. The optical information recording apparatus according to Claim 3, wherein after the sub-data recording unit forms a record mark with the center of the record mark deviated in the focusing direction from the irradiation line, the sub-data recording unit forms the next record mark with the center of the next record mark displaced with respect to the position of the deviated center.

5. The optical information recording apparatus according to Claim 1, wherein the focus shift unit is a spherical aberration generation means that applies a spherical aberration to the information light.

6. The optical information recording apparatus according to Claim 5, wherein the focus shift unit is a movable lens disposed among diverging rays or converging rays.

7. The optical information recording apparatus according to Claim 5, wherein the focus shift unit is a phase modulation element that changes the phase of the information light.

8. The optical information recording apparatus according to Claim 1, wherein the focus shift unit is an objective lens movement unit that drives the objective lens in the focusing direction.

9. The optical information recording apparatus according to Claim 1, further comprising a distance detector that detects a disk distance between the objective lens and the optical information recording medium, wherein:

the focus shift unit controls the disk distance so as to shift the focus of the information light to the target depth.

10. An optical information recording method comprising;

a record mark forming step of, when forming a record mark along a virtual irradiation line in an optical information recording medium by irradiating information light, which is emitted from a light source, to the optical information recording medium, in which information is recorded in the form of the record mark by irradiating the information light which is emitted from the light source and has an intensity equal to or larger than a predetermined intensity, according to information based on main data, shifting the focus of the information light in a focusing direction according to information based on sub-data, and thus forming the record mark with the center of the record mark deviated in the focusing direction from the irradiation line.

**11.** An optical information reproducing apparatus comprising:

a light source that emits information light;
an objective lens that concentrates the information light and irradiates it to an optical information recording medium;
a record mark detection unit that detects the presence or absence of a record mark formed along a virtual irradiation line in the optical information recording medium on the basis of a reflected light beam that is the information light reflected from the optical information recording medium; and
a deviation detection unit that detects the presence or absence of a deviation of the center of the record mark from the irradiation line in the focusing direction, in which the objective lens recedes from or approaches to the optical information recording medium, on the basis of the reflected light beam.

**12.** The optical information recording apparatus according to Claim 11, wherein the deviation detection unit detects the presence or absence of a deviation of the center of each record mark in the focusing direction from the irradiation line.

**13.** The optical information recording apparatus according to Claim 11, wherein after a record mark is formed with the center thereof deviated in the focusing direction from the irradiation line, the deviation detection unit detects a deviation of the next record mark that is formed with the center thereof displaced with respect to the position of the deviated center.

**14.** The optical information reproducing apparatus according to Claim 11, further comprising an objective lens drive unit that drives the objective lens, and a focus shift unit that shifts the focus of the information light in the focusing direction, wherein:

the objective lens concentrates servo light for focusing control;
the objective lens drive unit drives the objective lens so that the servo light will be focused on a reflecting layer included in the optical information recording medium; and
the focus shift unit separates the focus of the information light from the focus of the servo light by an arbitrary distance, and thus squares the focus of the information light with a target depth to which the information light should be irradiated.

**15.** The optical information reproducing apparatus according to Claim 11, further comprising an objective lens drive unit that drives the objective lens, wherein:

a sub-data production unit separates an out-of-focus quantity into a high-frequency component and a low-frequency component, and produces sub-data on the basis of the high-frequency component; and
the objective lens drive unit drives the objective lens on the basis of the low-frequency component.

**16.** An optical information reproducing method comprising:

a light receiving step of receiving a reflected light beam that is light emitted from a light source and reflected from an optical information recording medium; and
a detecting step of detecting the presence or absence of a record mark on the basis of the reflected light beam, and detecting the presence or absence of a deviation of the center of the record mark from an irradiation line in a focusing direction, in which an objective lens recedes from or approaches to the optical information recording medium, on the basis of the reflected light beam.

**17.** An optical information recording medium comprising:

a recording layer in which main data is recorded according to the presence or absence of a record mark formed with irradiation of information light, sub-data is recorded by forming the record mark with the center of the record mark deviated in a focusing direction parallel to the light axis of the information light, and the irradiated information light is modulated by the record mark.

**18.** The optical information recording medium according to Claim 17, further comprising a reflecting layer that reflects at least part of servo light irradiated for positional control.

**19.** The optical information recording medium according to Claim 17, wherein positional information is recorded in the reflecting layer with irregularities or a pit.

**20.** An optical information recording apparatus comprising:

an objective lens that concentrates information light and servo light for servo control and irradiates them to an optical information recording medium in which information is recorded in the form of a record mark by irradiating the information light, which is emitted from a light source and has an intensity equal to or larger than a predetermined intensity, to the optical information recording medium;

an objective lens drive unit that drives the objective lens so that the servo light will be focused on a reflecting layer which is formed in the optical information recording medium and reflects at least part of the servo light;

a focus shift unit that separates the focus of the information light from the focus of the servo light by an arbitrary distance in a focusing direction, in which the objective lens approaches to or recedes from the optical information recording medium, by changing the spherical aberration of the servo light, and squares the focus of the information light with a target depth to which the information light should be irradiated;

a main-data recording unit that forms a record mark along a virtual irradiation line in the optical information recording medium by controlling the light source according to information based on main data; and

a sub-data recording unit that deviates the center of the recordmark from the irradiation line by shifting the target depth in the focusing direction according to information based on sub-data.

**21.** An optical information reproducing apparatus comprising:

an objective lens that concentrates information light for information reproduction and servo light for servo control, and irradiates them;

an objective lens drive unit that drives the objective lens so that the servo light will be focused on a reflecting layer which is formed in an optical information recording medium and reflects at least part of the servo light;

a focus shift unit that separates the focus of the information light from the focus of the servo light by an arbitrary distance in a focusing direction, in which the objective lens approaches to or recedes from the optical information recording medium, by changing the spherical aberration of the servo light, and squares the focus of the information light with a target depth to which the information light should be irradiated;

a record mark detection unit that detects the presence or absence of a record mark, which is formed along a virtual irradiation line in the optical information recording medium, on the basis of a reflected light beam that is the information light reflected from the optical information recording medium; and

a deviation detection unit that detects the presence or absence of a deviation of the center of the record mark from the irradiation line in the focusing direction, in which the objective lens recedes from or approaches to the optical information recording medium, on the basis of the reflected light beam.

**22.** An optical information recording medium comprising:

a recording layer in which main data is recorded with the presence or absence of a record mark formed along a virtual irradiation line, sub-data is recorded by forming the record mark with the center of the record mark deviated from the irradiation line, and the irradiated information light is modulated by the record mark; and

a reflecting layer that reflects at least part of servo light irradiated in order to square the position of the information light in the recording layer with an arbitrary position.

**Amended claims under Art. 19.1 PCT**

**1.** (amended) An optical information apparatus comprising:

an objective lens that concentrates information light and irradiates it to an optical information recording medium in which information is recorded in the form of a record mark by irradiating the information light, which is emitted from a light source and has an intensity equal to or larger than a predetermined intensity, to the optical information recording medium;

a focus shift unit that shifts the focus of the information light in a focusing direction in which the objective lens recedes from or approaches to the optical information recording medium, and thus shifts the focus of the information light to a target depth to which the information light should be irradiated;

a main-data recording unit that forms a record mark along a virtual irradiation line in the optical information recording medium by controlling the light source according to information based on main data, and thus forms the record mark in a virtual record mark layer; and

a sub-data recording unit that shifts the target depth in the focusing direction according to information based on sub data, and thus forms the record mark with the center of the record mark deviated in the focusing direction from the irradiation line within the record mark layer.

2. (amended) The optical information apparatus according to Claim 1, further comprising an objective lens drive unit that drives the objective lens, wherein:

the objective lens concentrates servo light for focusing control;

the objective lens drive unit drives the objective lens so that the servo light will be focused on a reflecting layer included in the optical information recording medium; and

the focus shift unit separates the focus of the information light from the focus of the servo light by an arbitrary distance, and thus squares the focus of the information light with the target depth to which the information light should be irradiated.

3. (amended) The optical information apparatus according to Claim 2, wherein:

the sub-data recording unit forms each record mark with the center of the record mark deviated in the focusing direction from the irradiation line.

4. (amended) The optical information apparatus according to Claim 3, wherein after a record mark is formed with the center of the record mark deviated in the focusing direction from the irradiation line, the sub-data recording unit forms the next record mark with the center of the next record mark displaced with respect to the position of the deviated center.

5. (amended) The optical information apparatus according to Claim 1, wherein the focus shift unit is a spherical aberration generation means that applies a spherical aberration to the information light.

6. (excluded)

7. (excluded)

8. (amended) The optical information apparatus according to Claim 1, wherein the focus shift unit is an objective lens movement unit that drives the objective lens in the focusing direction.

9. (excluded)

10. (amended) An optical information recording method comprising:

a record mark forming step of, when forming a record mark along a virtual irradiation line in an optical information recording medium by irradiating information light, which is emitted from a light source, to the optical information recording medium, in which information is recorded in the form of the record mark by irradiating the information light, which is emitted from the light source and has an intensity equal to or larger than a predetermined intensity, to the optical information recording medium, according to information based on main data, shifting the focus of the information light in a focusing direction according to information based on sub-data, and thus forming the record mark with the center of the record mark deviated in the focusing direction from the irradiation line.

11. (amended) An optical information apparatus comprising:

a light source that emits information light;

an objective lens that concentrates the information light and irradiates it to an optical information recording medium;

a record mark detection unit that detects the presence or absence of a record mark formed along a virtual irradiation line in the optical information recording medium on the basis of a reflected light beam that is the information light reflected from the optical information recording medium; and

a deviation detection unit that detects the presence or absence of a deviation of the center of the record mark from the irradiation line in the focusing direction, in which the objective lens recedes from or approaches to the optical information recording medium, on the basis of the reflected light beam.

12. (amended) The optical information apparatus according to Claim 11, wherein the deviation detection unit detects the presence or absence of a deviation of the center of each record mark in the focusing direction from the irradiation line.

13. (amended) The optical information apparatus according to Claim 11, wherein after a record mark is formed with the center thereof deviated in the focusing direction from the irradiation line, the deviation detection unit detects a deviation of the next record mark that is formed with the center thereof displaced with respect to the position of the deviated center.

14. (amended) The optical information apparatus according to Claim 11, further comprising an objective lens drive unit that drives the objective lens, and a focus shift unit that shifts the focus of the information light in the focusing direction, wherein:

the objective lens concentrates servo light for focusing control;
the objective lens drive unit drives the objective lens so that the servo light will be focused on a reflecting layer included in the optical information recording medium; and
the focus shift unit separates the focus of the information light from the focus of the servo light by an arbitrary distance, and thus squares the focus of the information light with a target depth to which the information light should be irradiated.

15. (amended) The optical information apparatus according to Claim 11, further comprising an objective lens drive unit that drives the objective lens on the basis of an out-of-focus quantity between the record mark and the focus of the information light, wherein:

a sub-data production unit extracts a component that represents sub-data superposed in a driving control signal, and produces the sub-data.

16. (amended) The optical information apparatus according to Claim 11, further comprising:

an objective lens drive unit that drives the objective lens;
a sub-data production unit that separates an out-of-focus quantity between the record mark and the focus of the information light into a high-frequency component and a low-frequency component, and produces the sub-data on the basis of one of the high-frequency component and low-frequency component; and
an objective lens drive unit that drives the objective lens on the basis of the other one of the high-frequency component and low-frequency component.

17. (amended) An optical information reproducing method comprising:

a light receiving step of receiving a reflected light beam that is light emitted from a light source and reflected from an optical information recording medium; and
a detection step of detecting the presence or absence of a record mark on the basis of the reflected light beam, and detecting the presence or absence of a deviation of the center of the record mark from an irradiation line in a focusing direction, in which the objective lens recedes from or approaches to the optical information recording medium, on the basis of the reflected light beam.

18. (amended) An optical information recording medium comprising:

a recording layer in which main data is recorded according to the presence or absence of a record mark formed with irradiation of information light, sub-data is recorded by forming the record mark with the center of the record mark deviated in a focusing direction parallel to the light axis of the information light, and the irradiated information light is modulated by the record mark.

19. (amended) The optical information recording medium according to Claim 17, further comprising a reflecting layer that reflects at least part of servo light irradiated for positional control.

20. (amended) The optical information recording medium according to Claim 17, wherein positional information is recorded in the reflecting layer with irregularities or a pit.

21. (amended) An optical information apparatus comprising:

an objective lens that concentrates information light and servo light for servo control and irradiates them to an optical information recording medium in which information is recorded in the form of a record mark by irradiating the information light, which is emitted from a light source and has an intensity equal to or larger than a predetermined intensity, to the optical information recording medium;

an objective lens drive unit that drives the objective lens so that the servo light will be focused on a reflecting layer which is formed in the optical information recording medium and reflects at least part of the servo light;

a focus shift unit that separates the focus of the information light from the focus of the servo light by an arbitrary distance in a focusing direction, in which the objective lens approaches to or recedes from the optical information recording medium, by changing the spherical aberration of the servo light, and squares the focus of the information light with a target depth to which the information light should be irradiated;

a main-data recording unit that forms a record mark along a virtual irradiation line in the optical information recording medium by controlling the light source according to information based on main data; and

a sub-data recording unit that deviates the center of the record mark from the irradiation line by shifting the target depth in the focusing direction according to information based on sub-data.

22. (amended) An optical information apparatus comprising:

an objective lens that concentrates information light for information reproduction and servo light for servo control, and irradiates them;

an objective lens drive unit that drives the objective lens so that the servo light will be focused on a reflecting layer which is formed in an optical information recording medium and reflects at least part of the servo light;

a focus shift unit that separates the focus of the information light from the focus of the servo light by an arbitrary distance in a focusing direction, in which the objective lens approaches to or recedes from the optical information recording medium, by changing the spherical aberration of the servo light, and squares the focus of the information light with a target depth to which the information light should be irradiated;

a record mark detection unit that detects the presence or absence of a record mark, which is formed along a virtual irradiation line in the optical information recording medium, on the basis of a reflected light beam that is the information light reflected from the optical information recording medium; and

a deviation detection unit that detects the presence or absence of a deviation of the center of the record mark from the irradiation line in the focusing direction, in which the objective lens recedes from or approaches to the optical information recording medium, on the basis of the reflected light beam.

23. (added) An optical information recording medium comprising:

a recording layer in which main data is recorded with the presence or absence of a record mark formed along a virtual irradiation line, sub-data is recorded by forming the record mark with the center of the record mark deviated from the irradiation line in a direction perpendicular to a record mark layer in which the irradiation line is formed, and the irradiated information light is modulated by the record mark; and

a reflecting layer that reflects at least part of servo light irradiated in order to square the position of the information light in the recording layer with an arbitrary position.

[FIG. 1]

100H BORE

100 OPTICAL DISK

100 OPTICAL DISK

[FIG. 2]

[FIG. 3]

(A)

100 OPTICAL DISK

RM

p3

(B)

101

Y

[FIG. 4]

TR TRACK

TL IRRADIATION
LINE

FOCUSING DIRECTION

TRACKING DIRECTION

[FIG. 5]

(A)

RM RECORD MARK    ⌐CFC    △Mc    TL IRRADIATION
                                        LINE

                                    ↕
                          CFC    FOCUSING
                                 DIRECTION

(B)

SRF REPRODUCTION SIGNAL

(C)

SFEr RED FOCUSING
     ERROR SIGNAL

(D)

SFEb BLUE FOCUSING
     ERROR SIGNAL

[FIG. 6]

20

26 OPTICAL PICKUP

100 OPTICAL DISK

24 SPINDLE MOTOR

25A,25B

25 SLED MOTOR

SIGNAL PROCESSOR

RECORDING CONTROL UNIT

REPRODUCTION CONTROL UNIT

23

DRIVING CONTROL UNIT

22

80

70

SYSTEM CONTROLLER

21

EP 2 189 979 A1

[FIG. 7]

[FIG. 8]

[FIG. 9]

[FIG. 10]

[FIG. 11]

Lx

Lb2

LN

62H

62

63

[FIG. 12]

63

63A

63D

63B

63C

a2

[FIG. 13]

[FIG. 14]

(A) CLw RECORDING CLOCK

(B) Sw MAIN-DATA RECORD SIGNAL / SLa REFERENCE LEVEL

(C) Sm+ PLUS EMBEDDED SIGNAL

(D) Sm- MINUS EMBEDDED SIGNAL

(E) Uf RELAY DRIVING CURRENT / $\triangle$+m / $\triangle$-m

(F) RM RECORD MARK / CFc / TL IRRADIATION LINE / CFc / FOCUSING DIRECTION

t0 t1 t2 t3 t4 t5

EP 2 189 979 A1

41

[FIG. 15]

80

SRF

81

REPRODUCTIVE
CLOCK PRODUCTION
BLOCK

CLr

SRF

82

Ra

MAIN-DATA
INFORMATION
REPRODUCTION
BLOCK

SRO

TO SYSTEM
CONTROLLER 21

SRF

83

Rb

SUB-DATA
INFORMATION
REPRODUCTION
BLOCK

[FIG. 16]

[FIG. 17]

(A)                                                                    126

200

200A
INCIDENT SURFACE

140A
140

152

Lb1

151

(B)

Hd

HA

Hd

HA    200A

[FIG. 18]

(A) CLw RECORDING CLOCK

(B) Sw MAIN-DATA RECORD SIGNAL — SLa REFERENCE LEVEL

(C) Sm+ PLUS EMBEDDED SIGNAL

(D) Sm- MINUS EMBEDDED SIGNAL

(E) SCK INCIDENT SURFACE DISPLACEMENT SIGNAL

(F) SFD FOCUSING DRIVING CURRENT $\Delta+m$ $\Delta-m$ Cfc

(G) RM RECORD MARK — TL IRRADIATION LINE

Cfc

t31 t32 t33 Cfc t34

FOCUSING DIRECTION

[FIG. 19]

[FIG. 20]

[FIG. 21]

(A) RM RECORD MARK    CFC    △Mc    TL IRRADIATION LINE

CFC    FOCUSING DIRECTION

(B) SRF REPRODUCTION SIGNAL

(C) CLr REPRODUCTIVE CLOCK

(D) SRO REPRODUCTIVE BINARY-CODED SIGNAL

(E) SFEb BLUE FOCUSING ERROR SIGNAL

(F) SFEbH HIGH-FREQUENCY BAND FOCUSING SIGNAL

(G) SFEbL LOW-FREQUENCY BAND FOCUSING SIGNAL

t10    t11    t12    t13    t14    t15

[FIG. 22]

DESCRIPTION OF REFERENCE NUMERALS

20: OPTICAL DISK DRIVE,
21: SYSTEM CONTROLLER,
22: DRIVING CONTROL UNIT,
26, 126, 160: OPTICAL PICKUP,
30: SERVO OPTICAL SYSTEM,
31, 51, 151, 161: LASER DIODE,
34, 54, 163: POLARIZATION BEAM SPLITTER,
37: DICHROIC PRISM,
36, 57: QUARTER-WAVE PLATE,
40: OBJECTIVE LENS,
40A: BIAXIAL ACTUATOR,
43, 63: PHOTODETECTOR,
50: INFORMATION OPTICAL SYSTEM,
62: PINHOLE PLATE,
70: RECORDING CONTROL UNIT,
71: RECORDING CLOCK PRODUCTION BLOCK,
72: MAIN-DATA RECORDING SIGNAL PRODUCTION BLOCK,
73: EMBEDDED SIGNAL PRODUCTION BLOCK,
80, 180: REPRODUCTION CONTROL UNIT,
81: REPRODUCTIVE CLOCK PRODUCTION BLOCK,
82: MAIN-DATA INFORMATION REPRODUCTION BLOCK,
83, 184: SUB-DATA INFORMATION REPRODUCTION BLOCK,
183: BAND-PASS FILTER BLOCK,
Lb1, Lb2: BLUE LIGHT BEAM,
Lr1, Lr2: RED LIGHT BEAM,
100, 200: OPTICAL DISK,
100X: FRAUDULENT OPTICAL DISK,
101: RECORDING LAYER,
102, 103: SUBSTRATE,
104: REFLECTING LAYER,
SRF: REPRODUCTION SIGNAL,
SFEr: RED FOCUSING ERROR SIGNAL,
SFEb: BLUE FOCUSING ERROR SIGNAL,
SFEbH: HIGH-FREQUENCY BAND FOCUSING SIGNAL,
SFEbL: LOW-FREQUENCY BAND FOCUSING SIGNAL,
TL: IRRADIATION LINE, RM: RECORD MARK

**INTERNATIONAL SEARCH REPORT**

| | International application No. |
|---|---|
| | PCT/JP2009/058430 |

A. CLASSIFICATION OF SUBJECT MATTER
*G11B7/0045*(2006.01)i, *G11B7/007*(2006.01)i, *G11B7/09*(2006.01)i, *G11B7/135*
(2006.01)i, *G11B7/24*(2006.01)i

According to International Patent Classification (IPC) or to both national classification and IPC

B. FIELDS SEARCHED

Minimum documentation searched (classification system followed by classification symbols)
G11B7/00-7/013, G11B7/08-7/10, G11B7/12-7/22, G11B7/24, G11B7/28-7/30

Documentation searched other than minimum documentation to the extent that such documents are included in the fields searched
Jitsuyo Shinan Koho        1922-1996   Jitsuyo Shinan Toroku Koho   1996-2009
Kokai Jitsuyo Shinan Koho   1971-2009   Toroku Jitsuyo Shinan Koho   1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2002-312958 A (Ricoh Co., Ltd.), | 1-10,17-20, 22 |
| A | 25 October, 2002 (25.10.02), Full text; Figs. 1 to 4 (Family: none) | 11-16,21 |
| Y | JP 5-151591 A (International Business Machines Corp.), | 1-10,17-20, 22 |
| A | 18 June, 1993 (18.06.93), Full text; Figs. 1 to 32 & US 5202875 A          & EP 517491 A2 | 11-16,21 |
| Y | JP 4-268214 A (James T. Russell), 24 September, 1992 (24.09.92), | 1-10,17-20, 22 |
| A | Par. Nos. [0025], [0084] to [0088]; Figs. 19, 20 & US 5278816 A          & US 5056080 A & US 5291471 A          & EP 486060 A2 & EP 418879 A2          & EP 497211 A2 | 11-16,21 |

| ☒ Further documents are listed in the continuation of Box C. | ☐ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 28 July, 2009 (28.07.09) | 04 August, 2009 (04.08.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

<table>
<tr><td colspan="2" align="center">**INTERNATIONAL SEARCH REPORT**</td><td>International application No.<br>PCT/JP2009/058430</td></tr>
</table>

C (Continuation). DOCUMENTS CONSIDERED TO BE RELEVANT

| Category* | Citation of document, with indication, where appropriate, of the relevant passages | Relevant to claim No. |
|---|---|---|
| Y<br><br>A | JP 2001-76347 A (Sharp Corp.),<br>23 March, 2001 (23.03.01),<br>Full text; Figs. 1 to 11<br>& US 2004/0057350 A1    & US 6760299 B1<br>& US 2004/0202096 A1    & EP 1067523 A3<br>& EP 1950750 A1          & EP 1067523 A2 | 1-10,17-20,<br>22<br>11-16,21 |
| Y<br><br>A | JP 2000-242929 A (Sony Corp.),<br>08 September, 2000 (08.09.00),<br>Full text; Figs. 1 to 8<br>& US 2004/0090887 A1    & US 6801490 B1<br>& US 2004/0218491 A1    & US 6810004 B1<br>& US 2005/0036412 A1    & US 2008/0186835 A1<br>& EP 1076332 A1         & EP 1970905 A1<br>& EP 1059632 A1         & WO 2000/034947 A1<br>& WO 2000/034948 A1 | 1-10,17-20,<br>22<br>11-16,21 |

Form PCT/ISA/210 (continuation of second sheet) (April 2007)

**REFERENCES CITED IN THE DESCRIPTION**

**Patent documents cited in the description**

- WO 354410 A
- JP 2008071433 A